# EUROPEAN PATENT APPLICATION

(11) **EP 4 672 431 A1**
(43) Date of publication of application: **31.12.2025**
(21) Application number: 23931795.1
(22) Date of filing: 17.11.2023
(51) Int. Cl.: H01M 10/655, H01M 10/613

(54) **BATTERY CELL, BATTERY, AND ELECTRIC DEVICE**

(30) Priority: 06.04.2023 CN 202310361148
(71) Applicant: Contemporary Amperex Technology Co., Limited, Jiaocheng District Ningde Fujian 352100 (CN)
(72) Inventor: WANG, Shaoshan, Ningde, Fujian 352100 (CN); HE, Jianfu, Ningde, Fujian 352100 (CN); YE, Yonghuang, Ningde, Fujian 352100 (CN)
(74) Representative: Ran, Handong
(86) International application number: PCT/CN2023/132453
(87) International publication number: WO 2024/207749

(57) **Abstract**

The present application is applicable to the technical field of batteries (100), and provides a battery cell (10), a battery (100), and an electric device. The electric device comprises a battery (100). The battery (100) comprises a battery cell (10). The battery cell (10) comprises an electrode assembly (11) and a heat conduction member (13). The electrode assembly (11) comprises a main body (111) and tabs (112) arranged at one end or two opposite ends of the main body (111). The heat conduction member (13) is at least partially arranged at the end of the main body (111) provided with the tabs (112). By using the technical solution, the heat conduction member (13) implements the heat conduction at the end of the main body (111) close to the tabs (112) in a first direction (Z), so that the problem of the heat at the end of the main body (111) close to the tabs (112) being hard to be conducted out can be effectively mitigated, thereby facilitating implementation of the effect of uniform heat distribution inside the main body (111).

## Description

### CROSS-REFERENCE TO RELATED APPLICATIONS

The present application claims priority to Chinese Patent Application No. 202310361148.7, filed with the China National Intellectual Property Administration on April 6, 2023 and entitled "BATTERY CELL, BATTERY, AND ELECTRIC APPARATUS," which is incorporated herein by reference in its entirety.

### TECHNICAL FIELD

The present application relates to the field of battery technologies, specifically to a battery cell, a battery, and an electric apparatus.

### BACKGROUND

In related art, a battery cell typically includes a battery housing and an electrode assembly disposed within the battery housing, where the electrode assembly includes a main body portion and tabs disposed on the main body portion.

In some cases, during the use of the battery cell, different regions of the main body portion generate varying amounts of heat, resulting in uneven heat distribution within the main body portion, which leads to poor performance of the battery cell.

### SUMMARY

In view of the above problem, the purpose of the embodiments of the present application is to provide a battery cell, a battery, and an electric apparatus, so as to mitigate the problem of uneven heat distribution in the main body portion of the electrode assembly.

The technical solutions adopted by the embodiments of the present application are as follows:

According to a first aspect, an embodiment of the present application provides a battery cell, including:
an electrode assembly including a main body portion and tabs disposed at one end or opposite ends of the main body portion; and
a thermally conductive member, at least partially disposed at an end of the main body portion having the tabs.

In the battery cell provided in this embodiment of the present application, at least a portion of the thermally conductive member is disposed at the end of the main body portion having the tabs in a first direction, enabling the thermally conductive member to effectively conduct heat from the end of the main body portion having the tabs. This can effectively mitigate the problem of difficulty in dissipating heat from the end of the main body portion having the tabs, thereby helping to achieve the effect of uniform heat distribution within the main body portion.

In some embodiments, a thermal conductivity of at least a portion of the thermally conductive member is greater than a thermal conductivity of the main body portion.

Such an arrangement makes the thermal conductivity of at least a portion of the thermally conductive member greater than the thermal conductivity of the main body portion, enabling the at least portion of the thermally conductive member to conduct heat from the main body portion to achieve heat dissipation, which helps to improve the effect of uniform heat distribution within the main body portion.

In some embodiments, a ratio of a thermal conductivity of at least a portion of the thermally conductive member to a thermal conductivity of the main body portion is 1.5 to 5.

With such an arrangement, for the portion where the ratio of the thermal conductivity of the thermally conductive member to the thermal conductivity of the main body portion is 1.5 to 5, the thermally conductive member exhibits superior thermal conductivity. This helps to conduct the heat from the main body portion, thereby facilitating heat dissipation at the end of the main body portion having the tabs, and contributing to uniform heat distribution within the main body portion. Additionally, this facilitates the overall heat dissipation of the main body portion.

In some embodiments, the tabs are inserted through the thermally conductive member and are in contact with the thermally conductive member.

Such an arrangement enables heat from the main body portion to be conducted to the tabs through the thermally conductive member and further conducted to the battery housing through the tabs, or may be conducted to electrode terminals on the battery housing through the tabs and dissipated to the external environment. This facilitates the effect of conducting heat from the end of the main body portion having the tabs to the external environment through the first portion, thereby helping to improve the effect of uniform heat distribution within the main body portion.

In some embodiments, the tabs are disposed at one end or opposite ends of the main body portion in the first direction; the battery cell further includes a current collector for connecting the tabs, and a side of the thermally conductive member facing away from the main body portion in the first direction is in contact with the current collector.

Such an arrangement enables heat from the end of the main body portion having the tabs to be rapidly dissipated to the external environment through the thermally conductive member and the current collector in sequence, thereby contributing to achieving uniform heat distribution within the main body portion.

In some embodiments, the battery cell further includes a battery housing, the electrode assembly and the thermally conductive member are both accommodated within the battery housing, and the thermally conductive member is in contact with the battery housing.

Such an arrangement allows the thermally conductive member to directly conduct heat from the main body portion to the battery housing. This facilitates the heat dissipation effect of the main body portion and contributes to achieving uniform heat distribution within the main body portion.

In some embodiments, the tabs are disposed at one end or opposite ends of the main body portion in the first direction, and a projection of the thermally conductive member along the first direction onto the main body portion covers the main body portion.

Such an arrangement enables the thermally conductive member to have a large contact area with the end face of the main body portion having the tabs. This allows the thermally conductive member to effectively conduct heat from the end of the main body portion having the tabs, thereby helping to achieve the effect of uniform heat distribution within the main body portion and contributing to achieving the effect of overall heat dissipation of the main body portion.

In some embodiments, the tabs are disposed at one end or opposite ends of the main body portion in the first direction; a plurality of electrode assemblies are provided, and the main body portions of the multiple electrode assemblies are sequentially distributed along a second direction;
the thermally conductive member includes a first portion and a second portion, the first portion being disposed at the end of the main body portion having the tabs, and the second portion being disposed between two adjacent main body portions along the second direction; and
the first direction intersects with the second direction.

Such an arrangement allows the second portion to conduct heat from each of the two adjacent main body portions. In this way, the second portion can conduct and dissipate heat from a region of the main body portion close to the adjacent main body portion along the second direction, thereby helping to mitigate the problem of significant heat differences across different regions within the main body portion, and improving the effect of uniform heat distribution within the main body portion.

In some embodiments, a thermal conductivity of the first portion is greater than a thermal conductivity of the second portion.

Such an arrangement enables the thermally conductive member to perform targeted heat conduction and dissipation based on the different amounts of heat generated in different regions of the main body portion. This helps to achieve the effect of uniform heat distribution within the main body portion, thereby contributing to improving the performance and lifespan of the battery cell.

In some embodiments, a ratio of a thermal conductivity of the first portion to a thermal conductivity of the second portion is 1.2 to 2.5.

By adopting this technical solution, the thermal conductivity of the first portion can be made to be significantly greater than the thermal conductivity of the second portion. This enables the thermally conductive member to perform targeted heat conduction and dissipation based on the different amounts of heat generated in different regions of the main body portion, thereby helping to achieve the effect of uniform heat distribution within the main body portion.

In some embodiments, the battery cell further includes a battery housing, and the electrode assembly and the thermally conductive member are both accommodated within the battery housing; and
the tabs are disposed at one end of the main body portion in the first direction, and an end of the second portion facing away from the tabs along the first direction is in contact with the battery housing; and/or one side or two opposite sides of the second portion in a third direction are in contact with the battery housing, where the third direction intersects with both the first direction and the second direction; and/or the first portion is in contact with the battery housing.

By adopting this technical solution, all these arrangements are helpful for the heat from the end of the main body portion having the tabs to be rapidly conducted to the battery housing and dissipated through a thermal management component, thereby contributing to achieving uniform heat distribution within the main body portion.

In some embodiments, the tabs are disposed at one end of the main body portion in the first direction, the thermally conductive member further includes a third portion, and the third portion is disposed at an end of the main body portion opposite to the tabs in the first direction.

Such an arrangement enables the third portion to have a large area facing the battery housing, which facilitates the conduction of heat from the third portion to the battery housing, thereby improving the efficiency of the thermally conductive member in conducting heat to the battery housing. Thus, it helps to improve the efficiency of heat conduction from the end of the main body portion having the tabs and the side of the main body portion in the second direction to the battery housing, contributing to uniform heat distribution within the main body portion. Additionally, it also contributes to the overall heat dissipation of the main body portion.

In some embodiments, a thermal conductivity of the third portion is less than a thermal conductivity of the second portion.

Such an arrangement allows the second portion to conduct heat from a side of the main body portion in the second direction and the third portion to conduct heat from an end of the main body portion opposite to the tabs. This enables the thermally conductive member to perform targeted heat conduction based on the different amounts of heat generated in different regions of the main body portion, thereby helping to achieve the effect of uniform heat distribution within the main body portion and improve the performance and lifespan of the main body portion.

In some embodiments, a ratio of a thermal conductivity of the second portion to a thermal conductivity of the third portion is 1.1 to 1.8.

By adopting this technical solution, the thermal conductivity of the second portion can be effectively greater than that of the third portion. This enables the thermally conductive member to perform targeted heat conduction and dissipation based on the different amounts of heat generated in different regions of the main body portion, thereby helping to achieve the effect of uniform heat distribution within the main body portion.

In some embodiments, in the first direction, the first portion, the second portion, and the third portion are sequentially connected.

Such an arrangement facilitates heat conduction among the first portion, the second portion, and the third portion, contributing to the heat dissipation at the end of the main body portion having the tabs, thereby helping to achieve the effect of uniform heat distribution within the main body portion.

In some embodiments, the battery cell further includes a battery housing, the electrode assembly and the thermally conductive member are both accommodated within the battery housing, and two opposite sides of the third portion in the first direction are in contact with the main body portion and the battery housing, respectively.

Such an arrangement can effectively improve the heat dissipation effect for the end of the main body portion having the tabs and the side of the main body portion in the second direction, thereby contributing to achieving uniform heat distribution within the main body portion. Additionally, it also contributes to improving the effect of overall heat dissipation of the main body portion, thereby improving the performance and lifespan of the main body portion.

In some embodiments, a dimension of the first portion in the first direction is less than a dimension of the second portion in the second direction.

By adopting this technical solution, the second portion has a larger dimension in the second direction, so that the second portion exhibits better elastic properties to effectively absorb the expansion of the main body portion. Moreover, the first portion has a smaller dimension in the first direction, which can reduce the space occupied by the first portion in the first direction within the battery housing. In this way, a high energy density of the battery cell can be maintained, and the dimension of the through-hole in the first direction can be reduced, which is conducive to the discharge of gases from within the main body portion through the through-hole and also conducive to the injection of electrolyte into the main body portion.

In some embodiments, a ratio of a dimension of the second portion in the second direction to a dimension of the first portion in the first direction is 4.5 to 10.

Such an arrangement enables the second portion to have superior elastic properties to effectively absorb the expansion of the main body portion, and can reduce the space occupied by the first portion in the first direction within the battery housing. In this way a high energy density of the battery cell can be maintained, and the dimension of the through-hole in the first direction can be reduced, which is conducive to the discharge of gases from within the main body portion through the through-hole, and also conducive to the injection of electrolyte into the main body portion.

In some embodiments, the tabs are disposed at one end of the main body portion in the first direction, the thermally conductive member further includes a third portion, the third portion is disposed at an end of the main body portion opposite to the tabs in the first direction, and a dimension of the third portion in the first direction is less than a dimension of the second portion in the second direction.

Such an arrangement helps to reduce the space occupied by the third portion in the first direction within the battery housing, thereby contributing to maintaining a high energy density of the battery cell.

In some embodiments, the tabs are disposed at one end or opposite ends of the main body portion in the first direction, and the thermally conductive member is provided with a through-hole penetrating along the first direction.

Such an arrangement allows high-temperature and high-pressure gases within the main body portion to be discharged through the through-hole to a pressure relief mechanism on the battery housing and further discharged to the external environment, reducing the risk of explosion due to thermal runaway within the battery cell. Moreover, it allows the electrolyte to be injected into the main body portion through the through-hole, facilitating the penetration of electrolyte within the electrode assembly.

In some embodiments, a plurality of thermally conductive members are provided, and each thermally conductive member is correspondingly disposed at each main body portion; or
the thermally conductive member is disposed at ends of multiple main body portions having the tabs.

By adopting this technical solution, the thermally conductive member can dissipate heat from multiple main body portions, contributing to mitigating the problem of uneven heat distribution within the multiple main body portions.

In some embodiments, the thermally conductive member has buffering properties.

Such an arrangement allows the second portion to provide appropriate buffering for two adjacent main body portions, so as to absorb the expansion of the two adjacent main body portions, which can mitigate lithium plating problems in the main body portion. Moreover, the first portion can provide appropriate buffering for the tabs to offer protection to the tabs, thereby mitigating problems such as bending or cracking of the tabs relative to the main body portion.

According to a second aspect, an embodiment of the present application provides a battery including multiple battery cells.

The battery provided in this embodiment of the present application, by adopting the battery cells described above, can also mitigate the problem of uneven heat distribution within the main body portion due to high heat generation at the end having the tabs. This helps to achieve the effect of uniform heat distribution within the main body portion, thereby contributing to improving the performance and lifespan of the battery, and further enhancing the performance of the electric apparatus.

In some embodiments, the battery further includes a thermal management component configured to dissipate heat from the battery cells.

By adopting this technical solution, the thermal management component can perform thermal management on the battery cells. Specifically, the thermally conductive member can conduct heat from the main body portion to the battery housing, which is then dissipated through the thermal management component. This helps to achieve heat dissipation from the main body portion, thereby contributing to uniform heat distribution within the main body portion, and contributing to the overall heat dissipation of the battery cell.

In some embodiments, the tabs are disposed at one end of the main body portion in the first direction, and the thermal management component is disposed at an end of the battery cell facing away from the tabs along the first direction; and/or
the tabs are disposed at one end or opposite ends of the main body portion in the first direction, and in a direction intersecting the first direction, the thermal management component is disposed at a side of the battery cell.

Such an arrangement can effectively achieve the heat dissipation of the thermal management component on the main body portion and enable the thermal management component to dissipate heat from the end of the main body portion having the tabs. This helps to achieve the effect of uniform heat distribution within the main body portion and contributes to the overall heat dissipation of the main body portion.

According to a third aspect, an embodiment of the present application provides an electric apparatus including the battery cell or the battery.

The electric apparatus provided in this embodiment of the present application, by adopting the battery cell or battery described above, also helps to achieve the effect of uniform heat distribution within the battery cell, thereby contributing to improving the performance and lifespan of the battery, and further enhancing the performance of the electric apparatus.

The above description is merely an overview of the technical solutions of the present application. To provide a clearer understanding of the technical means of the present application, the content of the specification can be implemented, and to make the above and other purposes, features, and advantages of the present application more apparent and understandable, specific embodiments of the present application are provided below.

### BRIEF DESCRIPTION OF DRAWINGS

To more clearly illustrate the technical solutions in the embodiments of the present application, the accompanying drawings required for the description of the embodiments or exemplary technologies are briefly introduced below. It is evident that the accompanying drawings described below are merely some embodiments of the present application, and those of ordinary skill in the art can obtain other accompanying drawings based on these accompanying drawings without creative effort.
FIG. 1 is a schematic diagram of a vehicle according to some embodiments of the present application;
FIG. 2 is a schematic exploded view of a battery according to some embodiments of the present application;
FIG. 3 is a perspective schematic diagram of a battery cell according to some embodiments of the present application;
FIG. 4 is an exploded view of FIG. 3;
FIG. 5 is a schematic cross-sectional view along A-A in FIG. 3;
FIG. 6 is a schematic cross-sectional view of a battery cell according to some other embodiments of the present application;
FIG. 7 is a schematic diagram of the cooperation between a main body portion and a thermally conductive member of the battery cell provided in FIG. 4;
FIG. 8 is an enlarged view at B in FIG. 7;
FIG. 9 is an enlarged view at C in FIG. 7;
FIG. 10 is a schematic diagram of the cooperation between a battery cell and a thermal management component according to some embodiments of the present application;
FIG. 11 is a schematic diagram of the cooperation between a battery cell and a thermal management component according to some other embodiments of the present application; and
FIG. 12 is a schematic cross-sectional view of a battery cell according to yet some other embodiments of the present application.

Description of reference signs:
1000: vehicle; 100: battery; 200: controller; 300: motor; 10: battery cell; 20: casing; 21: first part; 22: second part; 30: thermal management component; 11: electrode assembly; 111: main body portion; 112: tab; 112a: positive tab; 112b: negative tab; 12: battery housing; 121: shell; 122: end cover; 13: thermally conductive member; 1301: through-hole; 1302: assembly hole; 131: first portion; 132: second portion; 133: third portion; 14: current collector; 15: electrode terminal; 16: pressure relief mechanism; Z: first direction; Y: second direction; X: third direction; H1: dimension of first portion in first direction; H2: dimension of second portion in second direction; and H3: dimension of third portion in first direction.

### DESCRIPTION OF EMBODIMENTS

The embodiments of the present application are described in detail below, and examples of these embodiments are illustrated in the accompanying drawings, wherein the same or similar reference numerals throughout denote the same or similar elements or elements having the same or similar functions. The embodiments described below with reference to the drawings are exemplary and intended to explain the present application, and should not be construed as limiting the present application.

In the description of the present application, it should be understood that the terms indicating orientation or positional relationships, such as "length," "width," "upper," "lower," "front," "rear," "left," "right," "vertical," "horizontal," "top," "bottom," "inner," "outer," and the like, are based on the orientation or positional relationships shown in the drawings. These terms are used merely for convenience in describing the present application and simplifying the description, and do not indicate or imply that the referred device or element must have a specific orientation, be constructed, or operate in a specific orientation, and thus should not be construed as limiting the present application.

Furthermore, the terms "first" and "second" are used for descriptive purposes only and should not be understood as indicating or implying relative importance or implicitly specifying the number of technical features indicated. Thus, a feature defined with "first" or "second" may explicitly or implicitly include one or more of such features.

In the description of the present application, "multiple" means two or more, unless explicitly and specifically defined otherwise, and "two or more" includes two. Accordingly, "multiple groups" means two or more groups, including two groups.

In the description of the present application, unless explicitly specified and limited otherwise, terms such as "mounting," "connection," "joining," and "fastening" should be understood in a broad sense. For example, they may refer to a fixed connection, a detachable connection, or an integral formation; they may refer to a mechanical connection or an electrical connection; they may refer to a direct connection or an indirect connection via an intermediate medium; or they may refer to internal communication between two elements or an interaction relationship between two elements. For those of ordinary skill in the art, the specific meanings of the above terms in the present application can be understood based on specific circumstances.

In the description of the present application, the term "and/or" is merely an association describing related objects, indicating that three relationships may exist. For example, A and/or B may indicate: A exists alone, A and B exist simultaneously, or B exists alone. Additionally, in the present application, the character "/" generally indicates an "or" relationship between the associated objects.

In related art, a battery cell includes a shell and an electrode assembly, where the electrode assembly is disposed within the shell. The electrode assembly includes a main body portion and tabs, with the tabs disposed at one end or opposite ends of the main body portion.

During the use of the battery cell, the heat generated in different regions of the main body portion is typically uneven, resulting in uneven heat distribution within the main body portion, which leads to poor performance of the battery cell.

Specifically, the tabs generate a significant amount of heat, causing regions of the main body portion close to the tabs to have a higher heat output compared to regions farther from the tabs. This results in a significant heat difference between the region of the main body portion close to the tabs and the region farther from the tabs, leading to uneven heat distribution within the main body portion, which easily reduces the performance and lifespan of the main body portion.

In some cases, heat dissipation of the battery cell can be achieved by providing a thermal management component. For ease of use of the battery cell, the thermal management component is typically disposed in a region of the battery cell where tabs are not provided. For convenience of description, the battery cell is defined as having a height direction, a width direction, and a thickness direction, where the height direction of the battery cell corresponds to the height direction of the main body portion, and the tabs are disposed at one end or opposite ends of the main body portion in the height direction. For example, when the tabs are disposed at one end of the main body portion in the height direction, the thermal management component may be disposed on a side of the battery cell farther from the tabs in the height direction. For another example, when the tabs are disposed at one end or opposite ends of the main body portion in the height direction, the thermal management component may be disposed on one side or two opposite sides of the battery cell in the width direction, or on one side or two opposite sides in the thickness direction. As a result, the heat from the region of the main body portion close to the tabs is difficult to be conducted to the thermal management component, making it challenging to cool down the region close to the tabs. Consequently, the heat in the region of the main body portion close to the tabs remains significantly higher than that in the region farther from the tabs in the height direction, leading to a large heat difference between different regions within the main body portion, and the problem of uneven heat distribution within the main body portion remains difficult to resolve, resulting in poor performance of the battery cell.

Based on the above considerations, the embodiments of the present application provide a battery cell, a battery, and an electric apparatus. By disposing at least a portion of a thermally conductive member at the end of the main body portion having the tabs, the thermally conductive member can conduct heat from the end of the main body portion having the tabs, which can effectively mitigate the problem of difficulty in dissipating heat from the region of the main body portion close to the tabs, thereby reducing the heat difference between the region close to the tabs and the region farther from the tabs. This helps to achieve the effect of uniform heat distribution within the main body portion.

In some embodiments, the battery cell involved in the embodiments of the present application may be used in an electric apparatus that uses a battery cell or battery as a power source, and the battery involved in the embodiments of the present application may be used in an electric apparatus that uses a battery as a power source.

The electric apparatus may include, but is not limited to, mobile phones, tablets, laptops, electric toys, electric tools, electric bicycles, electric vehicles, ships, and spacecrafts. Electric toys may include stationary or mobile electric toys, such as game consoles, electric car toys, electric ship toys, electric airplane toys, while spacecrafts may include airplanes, rockets, space shuttles, and spaceships. Vehicles may be fuel-powered vehicles, gas-powered vehicles, or new energy vehicles, where new energy vehicles may include battery electric vehicles, hybrid electric vehicles, or extended-range electric vehicles, and the like.

In some embodiments, the battery cell and battery involved in the embodiments of the present application may also be used in energy storage devices. The energy storage devices may include energy storage containers, energy storage cabinets, and the like.

The battery involved in the embodiments of the present application may be a single physical module including one or more battery cells to provide higher voltage and capacity. When there are multiple battery cells, the multiple battery cells are connected in series, parallel, or a combination thereof via a busbar component, where the combination includes both series and parallel connections.

In some embodiments, the battery may be a battery module. When there are multiple battery cells, the multiple battery cells are arranged and fixed to form a battery module. As an example, multiple battery cells may be fixed using a strap to form a battery module. As an example, multiple battery cells may be fixed using end plates, side plates, and the like to form a battery module.

In some embodiments, the battery may be a battery pack, where the battery pack may include a casing and battery cells. As an example, the battery cells may be directly accommodated in the casing. As an example, the battery cells may first form a battery module, which is then accommodated in the casing.

For ease of description, the embodiments of the present application take the electric apparatus as a vehicle as an example for illustration.

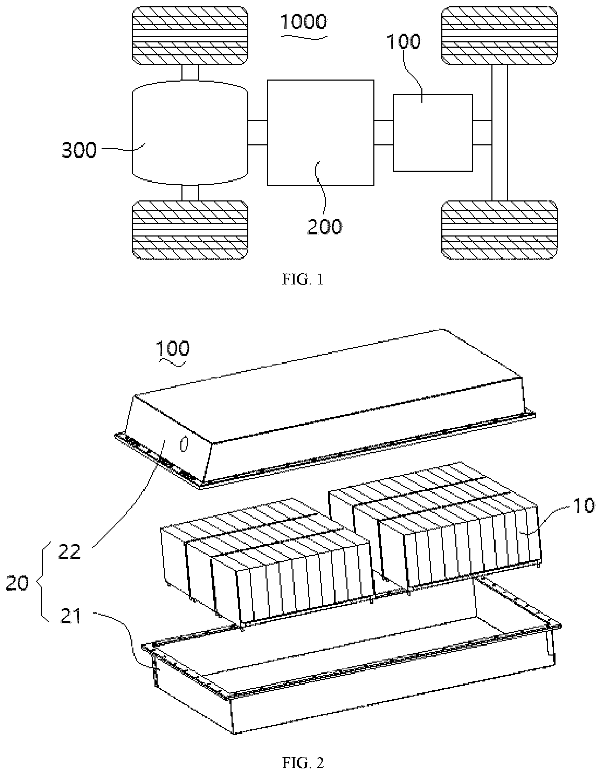

Referring to FIG. 1, FIG. 1 is a schematic diagram of a vehicle 1000 according to some embodiments of the present application. The aforementioned battery 100 is disposed inside the vehicle 1000, and the battery 100 may be disposed at the bottom, front, or rear of the vehicle 1000. The battery 100 may be used to supply power to the vehicle 1000; for example, the battery 100 may serve as an operational power source for the vehicle 1000. The vehicle 1000 may further include a controller 200 and a motor 300, where the controller 200 is used to control the battery 100 to supply power to the motor 300, for example, to meet the power demands for starting, navigating, and driving the vehicle 1000.

In some embodiments, the battery 100 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery 100 according to some embodiments of the present application. The battery 100 includes a casing 20 and multiple battery cells 10. The casing 20 is a structure with an accommodating space inside, and the casing 20 may adopt various structures. In some embodiments, the casing 20 may include a first part 21 and a second part 22, where the first part 21 and the second part 22 are mutually covered to collectively define the aforementioned accommodating space. The first part 21 may be a hollow structure with an opening at one end, and the second part 22 may be a plate-like structure, where the second part 22 covers the opening side of the first part 21, so that the first part 21 and the second part 22 collectively define the aforementioned accommodating space; alternatively, both the first part 21 and the second part 22 may be hollow structures with an opening at one end, as shown in FIG. 2, where the opening side of the first part 21 covers the opening side of the second part 22, so that the first part 21 and the second part 22 collectively define the aforementioned accommodating space. The casing 20 formed by the first part 21 and the second part 22 may have various shapes, such as a cylinder and cuboid.

In some embodiments, the multiple battery cells 10 may be connected in series, parallel, or a combination thereof to form an integral unit, and the integral unit formed by the multiple battery cells 10 is then directly accommodated in the aforementioned accommodating space of the casing 20, as shown in FIG. 2. Alternatively, of the multiple battery cells 10 may first be connected in series, parallel, or a combination thereof, and arranged and fixed to form multiple battery modules, and the multiple battery modules are then connected in series, parallel, or a combination thereof to form an integral unit, which is accommodated in the aforementioned accommodating space of the casing 20.

In some embodiments, referring to FIG. 1 and FIG. 2 together, when the battery 100 is applied to the vehicle 1000, the casing 20 of the battery 100 may form part of the chassis structure of the vehicle 1000. For example, a portion of the casing 20 may constitute at least a part of the chassis of the vehicle 1000, or a portion of the casing 20 may constitute at least a part of the crossbeams and longitudinal beams of the vehicle 1000.

A battery cell 10 refers to the smallest unit for storing and outputting electrical energy. The battery cell 10 may be a secondary battery or a primary battery. The battery cell 10 may include, but is not limited to, a metal battery, a lithium-sulfur battery, a sodium-ion battery, or a magnesium-ion battery. The battery cell 10 may be cylindrical, flat, cuboidal, or in other shapes.

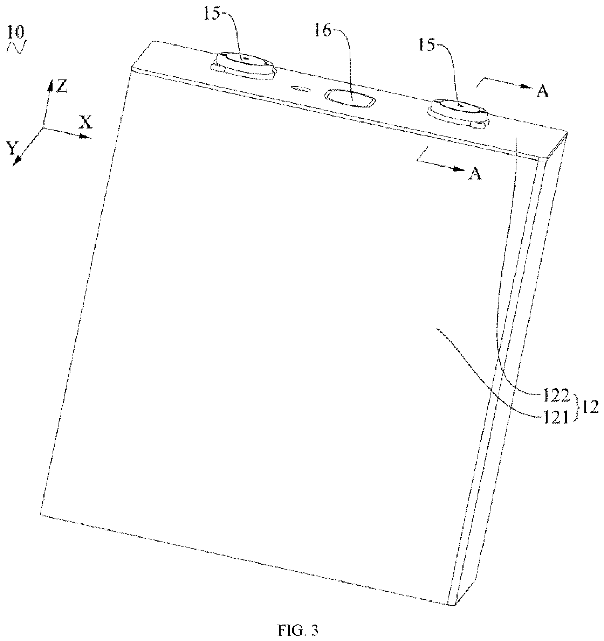

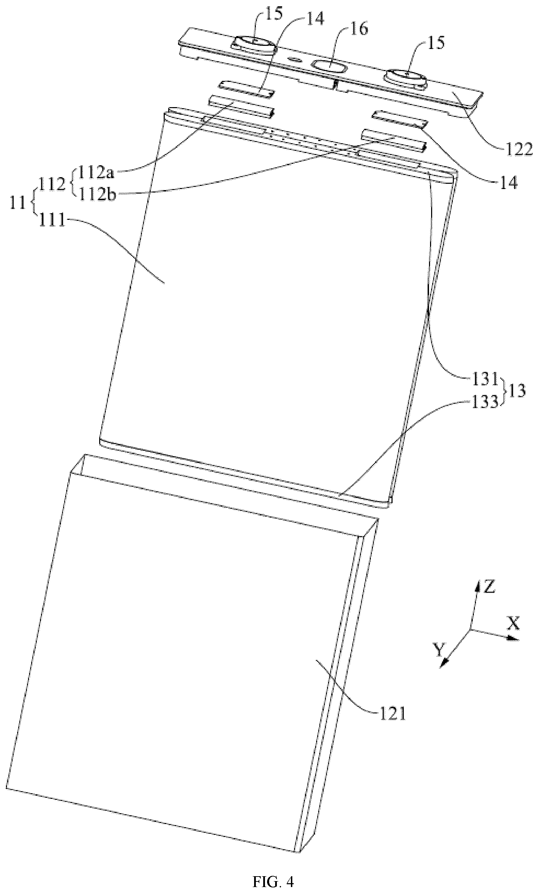

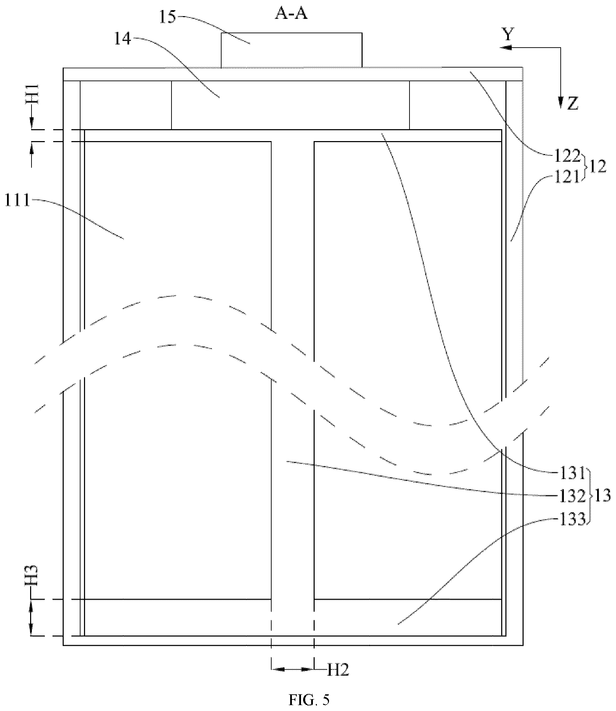

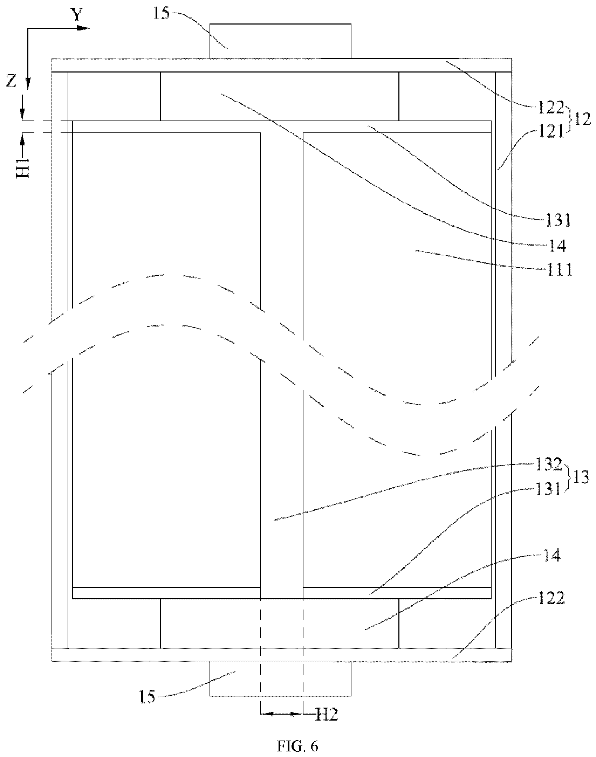

Referring to FIGs. 3 to 6 together, FIG. 3 shows a perspective schematic diagram of a battery cell 10 according to some embodiments of the present application, FIG. 4 shows an exploded view of FIG. 3, FIG. 5 shows a schematic cross-sectional view along A-A in FIG. 3, and FIG. 6 shows a schematic cross-sectional view of a battery cell 10 according to some other embodiments of the present application. The battery cell 10 provided in this embodiment of the present application includes an electrode assembly 11 and a thermally conductive member 13. The electrode assembly 11 includes a main body portion 111 and tabs 112, where the tabs 112 are disposed at one end or opposite ends of the main body portion 111. At least a portion of the thermally conductive member 13 is disposed at the end of the main body portion 111 having the tabs 112.

The electrode assembly 11 is a component in the battery cell 10 where electrochemical reactions occur. The electrode assembly 11 is primarily formed by winding or stacking a positive electrode plate and a negative electrode plate, with a separator disposed between the positive electrode plate and the negative electrode plate. Portions of the positive electrode plate and the negative electrode plate containing active material constitute the main body portion 111 of the electrode assembly 11, while portions of the positive electrode plate and the negative electrode plate without active material each constitute a tab 112. The tabs 112 include a positive tab 112a and a negative tab 112b; specifically, a tab 112 of the positive electrode plate is the positive tab 112a, and a tab 112 of the negative electrode plate is the negative tab 112b.

Specifically, the tabs 112 are disposed at one end or opposite ends of the main body portion 111 in a first direction Z. The first direction Z is parallel to direction Z illustrated in FIGs. 3 to 6. In some possible designs, as shown in FIGs. 3 to 5, the tabs 112 may be disposed at one end of the main body portion 111 in the first direction Z; specifically, the positive tab 112a and the negative tab 112b are spaced apart at the same end of the main body portion 111 in the first direction Z. In some possible designs, as shown in FIG. 6 and in combination with other accompanying drawings, the tabs 112 may alternatively be disposed at opposite ends of the main body portion 111 in the first direction Z; specifically, the positive tab 112a is disposed at one end of the main body portion 111 in the first direction Z, and the negative tab 112b is disposed at the other end of the main body portion 111 in the first direction Z.

In some contexts, the electrode assembly 11 may also be referred to as a bare cell, a wound body, a stacked body, or the like.

In some contexts, the first direction Z is a height direction or length direction of the main body portion 111. The directions of the main body portion 111 correspond to the directions of the entire battery cell 10. Specifically, the height direction of the main body portion 111 is also the height direction of the battery cell 10, and the length direction of the main body portion 111 is also the length direction of the battery cell 10. The width direction, thickness direction, and other directions of the main body portion 111 mentioned below also correspond to the directions of the entire battery cell 10.

In the battery cell 10, the number of electrode assemblies 11 may be one or multiple. When there are multiple electrode assemblies 11, the multiple electrode assemblies 11 may be sequentially distributed along a second direction Y or may be sequentially distributed along a third direction X. The first direction Z intersects with the second direction Y, and the third direction X intersects with both the first direction Z and the second direction Y. The second direction Y is parallel to the direction Y illustrated in FIGs. 3 to 6, and the third direction X is parallel to the direction X illustrated in FIGs. 3 and 4. The intersection of the first direction Z with the second direction Y means that the first direction Z and the second direction Y form an included angle greater than 0° and less than 180°. The first direction Z and the second direction Y may intersect or may be directions on different planes. The first direction Z and the second direction Y may be perpendicular or non-perpendicular. The intersection of the third direction X with the first direction Z and the intersection of the third direction X with the second direction Y can both refer to the specific description of the intersection of the first direction Z with the second direction Y, and will not be repeated herein.

The main body portion 111 may have a generally cuboidal, cylindrical, or in other shapes. When the main body portion 111 is generally cuboidal, the main body portion 111 has a height direction, a width direction, and a thickness direction. The second direction Y may be the width direction of the main body portion 111, and the third direction X may correspondingly be the thickness direction of the main body portion 111; alternatively, the second direction Y may be the thickness direction of the main body portion 111, and the third direction X may correspondingly be the thickness direction of the main body portion 111. When the main body portion 111 is cylindrical, the second direction Y and the third direction X may also be the radial directions of the main body portion 111.

The thermally conductive member 13 is a component with thermal conductivity, specifically may be configured to conduct heat from the main body portion 111. Specifically, at least a portion of the thermally conductive member 13 is disposed at the end of the main body portion 111 having the tabs 112 in the first direction Z, so that the thermally conductive member 13 can conduct heat from the end of the main body portion 111 having the tabs 112 in the first direction Z. The portion of the thermally conductive member 13 disposed at the end of the main body portion 111 having the tabs 112 in the first direction Z is a first portion 131, meaning that the first portion 131 also has thermal conductivity.

The thermally conductive member 13 may be configured such that a part of it is disposed at the end of the main body portion 111 having the tabs 112; and based on this, the thermally conductive member 13 includes the first portion 131 and other portions. The other portions may include, but are not limited to, a second portion 132 and a third portion 133 described below. Alternatively, the thermally conductive member 13 may be configured to be entirely disposed at the end of the main body portion 111 having the tabs 112; and based on this, the thermally conductive member 13 includes only the first portion 131.

It should be noted that the first portion 131 is disposed at the end of the main body portion 111 having the tabs 112 in the first direction Z and is in contact with that end of the main body portion 111 having the tabs 112, so that the first portion 131 conducts heat from that end of the main body portion 111 having the tabs 112.

When the tabs 112 are disposed at one end of the main body portion 111 in the first direction Z, as shown in FIGs. 3 to 5, the first portion 131 is disposed at the one end of the main body portion 111 in the first direction Z, specifically disposed at the end of the main body portion 111 having the tabs 112 in the first direction Z. When the tabs 112 are disposed at opposite ends of the main body portion 111 in the first direction Z, as shown in FIG. 6 and in combination with other accompanying drawings, the number of first portions 131 may be multiple, with first portions 131 disposed at both opposite ends of the main body portion 111 in the first direction Z.

The battery cell 10 provided in this embodiment of the present application includes an electrode assembly 11 and a thermally conductive member 13, where the electrode assembly 11 includes a main body portion 111 and tabs 112. At least a portion of the thermally conductive member 13 is disposed at the end of the main body portion 111 having the tabs 112, enabling heat conduction from the end of the main body portion 111 having the tabs 112. To be specific, the thermally conductive member 13 can directly conduct heat from the region of the main body portion 111 close to the tabs 112, effectively mitigating the problem of difficulty in dissipating heat from a region of the main body portion 111 close to the tabs 112, thereby reducing the heat difference between the region of the main body portion 111 close to the tabs 112 and region of the main body portion 111 farther from the tabs 112. This helps to mitigate the problem of uneven heat distribution within the main body portion 111 caused by a large heat difference between the region of the main body portion 111 having the tabs 112 and the region of the main body portion 111 farther from the tabs 112, thereby contributing to improving the effect of uniform heat distribution within the main body portion 111, enhancing the performance and lifespan of the main body portion 111, and further contributing to improving the performance and lifespan of the battery 100 and the electric apparatus composed of the battery cells 10.

In some embodiments, the battery cell 10 may further include an electrolyte, where the electrolyte serves to ion conduction between the positive electrode plate and the negative electrode plate. The electrolyte involved in the embodiments of the present application may be liquid, gel, or solid.

In some embodiments, referring to FIGs. 3 to 6 together, the battery cell 10 may further include a battery housing 12, where the battery housing 12 is configured to define the internal environment of the battery cell 10, and the internal environment defined by the battery housing 12 is used to accommodate the electrode assembly and the electrolyte.

The battery housing 12 may include a shell 121 and an end cover 122, where the shell 121 and the end cover 122 are components configured to collectively define the internal environment of the battery cell 10. The shell 121 and the end cover 122 may be independent components; specifically, the end cover 122 covers the shell 121 to collectively define the internal environment of the battery cell 10 with the shell 121, and to isolate the internal environment of the battery cell 10 from the external environment. Alternatively, the shell 121 and the end cover 122 may be an integrated structure; specifically, a common connection surface may be formed between the end cover 122 and the shell 121 before the electrode assembly 11 is inserted into the shell, and when the electrode assembly 11 needs to be encapsulated after being inserted into the shell, the end cover 122 is then fitted onto the shell 121.

The number of end covers 122 may be one, as shown in FIGs. 3 to 5. Alternatively, the number of end covers 122 may be two, as shown in FIG. 6, with the two end covers 122 disposed at opposite ends of the shell 121, respectively.

The shell 121 may be cylindrical, rectangular, or in other shapes, specifically may be determined based on the specific shape and size of the electrode assembly 11. Additionally, materials of the shell 121 and the end cover 122 may be various, such as copper, iron, aluminum, stainless steel, aluminum alloy, and plastic.

In some embodiments, as shown in FIGs. 4 to 6 and in combination with other accompanying drawings, both the electrode assembly 11 and the thermally conductive member 13 are accommodated within the battery housing 12. Specifically, when the thermally conductive member 13 includes only the first portion 131, the first portion 131 is accommodated within the battery housing 12; and when the thermally conductive member 13 includes the first portion 131 and other portions, both the first portion 131 and the other portions may be accommodated within the battery housing 12. The other portions of the thermally conductive member 13 may include, but are not limited to, the second portion 132 and the third portion 133 described below. Such an arrangement, compared to some solutions where a thermally conductive structure penetrates the battery housing 12 to conduct heat from the electrode assembly 11 to the external environment, accommodates the thermally conductive member 13 within the battery housing 12, which can effectively achieve the heat conduction for the main body portion 111 of the electrode assembly 11 and can also effectively mitigate the problem of electrolyte leakage.

In some embodiments, referring to FIGs. 3 to 6 together, the battery housing 12 may further be provided with electrode terminals 15, where the electrode terminals 15 are configured to connect to the tabs 112. The electrode terminals 15 may be directly connected to the tabs 112 or may be indirectly connected to the tabs 112 via conductive components such as the current collector 14 described below. The electrode terminals 15 serve as the current transmission ends of the electrode assembly 11 for transmitting current. The electrode terminals 15 may include a positive electrode terminal and a negative electrode terminal, where the positive electrode terminal is configured to connect to the positive tab 112a, and the negative electrode terminal is configured to connect to the negative tab 112b. The electrode terminals 15 may be disposed on the end cover 122 or may be disposed on the shell 121, depending on the actual design.

As some examples, as shown in FIGs. 3 to 5, the positive tab 112a and the negative tab 112b are both located at one end of the main body portion 111, and the number of end covers 122 may be set to one or two. When there is one end cover 122, as shown in FIGs. 3 to 6, the end cover 122 is located at the end of the shell 121 corresponding to the tabs 112, and both the positive electrode terminal and the negative electrode terminal are disposed on this end cover 122. When there are two end covers 122, both the positive electrode terminal and the negative electrode terminal are disposed on the end covers 122 corresponding to the tabs 112. Additionally, the positive electrode terminal is connected to the positive tab 112a, and the negative electrode terminal is used to connect to the negative tab 112b.

As some examples, as shown in FIG. 6 and in combination with other accompanying drawings, the positive tab 112a and the negative tab 112b are located at opposite ends of the main body portion 111, respectively, and the number of end covers 122 is two. One of the end covers 122 is provided with a positive electrode terminal, disposed at the end of the shell 121 corresponding to the positive tab 112a, and connected to the positive tab 112a; and the other end cover 122 is provided with a negative electrode terminal, disposed at the end of the shell 121 corresponding to the negative tab 112b, and connected to the negative tab 112b.

It should be noted that during operation of the thermally conductive member 13, the thermally conductive member 13 may be configured to conduct heat from the end of the main body portion 111 having the tabs 112 to the battery housing 12, electrode terminals 15, or the like, which is then dissipated to the external environment, achieving heat dissipation from the region of the main body portion 111 having the tabs 112. Specifically, the first portion 131 may directly conduct heat from the end of the main body portion 111 having the tabs 112 to the battery housing 12, electrode terminals 15, or the like for dissipation; of course, alternatively, the first portion 131 may conduct heat from the region of the main body portion 111 having the tabs 112 to other portions, which is then conducted to the external environment through the other portions. The battery housing 12 mentioned herein may be the shell 121 or the end cover 122.

It should also be noted that when the number of electrode assemblies 11 is one, the thermally conductive member 13 may include only the first portion 131. Based on this, the sides of the main body portion 111 in the second direction Y and the third direction X may be close to the battery housing 12 and directly dissipate heat through the battery housing 12. Thus, the main body portion 111 directly conducts heat to the battery housing 12, and the heat from the end of the main body portion 111 having the tabs 112 is conducted through the first portion 131 of the thermally conductive member 13. In this way, the overall heat dissipation of the main body portion 111 can be effectively achieved, which helps to cool the main body portion 111, and achieve the effect of uniform heat distribution within the entirety. The battery housing 12 mentioned herein may be the shell 121 or the end cover 122.

In some embodiments, a thermal conductivity of at least a portion of the thermally conductive member 13 is greater than a thermal conductivity of the main body portion 111.

It can be understood that the overall thermal conductivity of the thermally conductive member 13 is greater than the thermal conductivity of the main body portion 111; alternatively, a thermal conductivity of a portion of the thermally conductive member 13 is greater than the thermal conductivity of the main body portion 111.

In some possible designs, the thermally conductive member 13 may be configured as a component with a substantially uniform thermal conductivity throughout. Based on this, the thermal conductivity of the thermally conductive member 13 is greater than the thermal conductivity of the main body portion 111.

In other possible designs, the thermally conductive member 13 may be configured to have portions with different thermal conductivities. Based on this, a thermal conductivity of a portion of the thermally conductive member 13 is greater than the thermal conductivity of the main body portion 111, or a thermal conductivity of a portion with the lowest thermal conductivity among these multiple portions of the thermally conductive member 13 is greater than the thermal conductivity of the main body portion 111.

It should be noted that when the thermally conductive member 13 includes only the first portion 131, the thermal conductivity of the first portion 131 is greater than the thermal conductivity of the main body portion 111. When the thermally conductive member 13 includes the first portion 131 and other portions, the other portions may include, but are not limited to, the third portion 133 described below, and a thermal conductivity of at least one of the first portion 131, the second portion 132, and the other portions is greater than the thermal conductivity of the main body portion 111.

Such an arrangement makes the thermal conductivity of at least a portion of the thermally conductive member 13 greater than the thermal conductivity of the main body portion 111, enabling the at least a portion of the thermally conductive member 13 to conduct heat from the main body portion 111 to achieve heat dissipation of the main body portion 111, which helps to improve the effect of uniform heat distribution within the main body portion 111.

In actual operation, at least the portion of the thermally conductive member 13 disposed at the end of the main body portion 111 having the tabs 112 may be configured to have a thermal conductivity greater than the thermal conductivity of the main body portion 111, to be specific, the thermal conductivity of the first portion 131 is greater than the thermal conductivity of the main body portion 111. This effectively enables the thermally conductive member 13 to conduct heat from a region of the main body portion 111 having the tabs 112, to reduce the heat difference within the main body portion 111, thereby improving the effect of uniform heat distribution within the main body portion 111.

It should be supplemented that the thermal conductivity of the main body portion 111 can be obtained through various methods.

In some examples, during the process of measuring the thermal conductivity of the main body portion 111, a heating plate may first be placed between two main body portions 111. Next, along a stacking direction of the two main body portions 111 and the heating plate, thermally conductive plates are respectively arranged on sides of the two main body portions 111 facing away from the heating plate. Additionally, insulating plates are arranged in other directions of the main body portions 111. The other directions mentioned herein refer to directions other than the stacking direction of the two main body portions 111; for example, when the stacking direction of the two main body portions 111 is the thickness direction of the main body portions 111, the other directions may include the height direction, width direction, and the like of the main body portions 111. Then, along the stacking direction of the two main body portions 111, cooling plates are arranged on the sides of the thermally conductive plates facing away from the main body portions 111. In this way, the heating plate, two main body portions 111, two thermally conductive plates, and two cooling plates form a structure of cooling plate-thermally conductive plate-main body portion 111-heating plate-main body portion 111-thermally conductive plate-cooling plate.

During operation, the power of the heating plate is adjusted multiple times to heat the main body portions 111. After each power adjustment of the heating plate, the main body portions 111 are left standing for a period, allowing the heat from the main body portions 111 to be conducted through the thermally conductive plates to the cooling plates for cooling, until the temperature of a side of the main body portion 111 close to the heating plate and the temperature of a side of the main body portion 111 close to the cooling plate reach a predetermined constant value, and a set of temperature data for the main body portion 111 is recorded, where the set of temperature data includes the temperature of the side of the main body portion 111 close to the heating plate and the temperature of the side of the main body portion 111 close to the cooling plate. Based on this, multiple sets of temperature data for the main body portion 111 can be obtained by adjusting the power of the heating plate multiple times. By performing data fitting with the dimensions of the main body portion 111, the multiple sets of temperature data for the main body portion 111, and the heating plate power corresponding to each set of data for the main body portion 111, the thermal conductivity of the main body portion 111 can be calculated.

The thermal conductivity of the main body portion 111 is calculated as: L*Q/(ΔT*2*A).

L is a dimension of the main body portion 111 in the stacking direction of the main body portion 111, Q is a power of the heating plate, A is a cross-sectional area of the main body portion 111 perpendicular to the stacking direction of the main body portion 111, and ΔT is a temperature difference between the side of the main body portion 111 close to the heating plate and the side of the main body portion 111 close to the cooling plate.

In some embodiments, the overall thermal conductivity of the thermally conductive member 13 is greater than the overall thermal conductivity of the main body portion 111. It can be understood that during the measurement of thermal conductivity, a thermal conductivity of any arbitrarily obtained portion of the thermally conductive member 13 is greater than the thermal conductivity of the main body portion 111, meaning that a thermal conductivity of any portion of the thermally conductive member 13 is greater than the thermal conductivity of the main body portion 111. It can also be understood that a thermal conductivity of a portion of the thermally conductive member 13 with the lowest thermal conductivity is greater than the thermal conductivity of the main body portion 111. Specifically, when the thermally conductive member 13 includes only the first portion 131, the thermal conductivity of the first portion 131 is greater than the thermal conductivity of the main body portion 111. When the thermally conductive member 13 includes the first portion 131 and other portions, both the thermal conductivity of the first portion 131 and the thermal conductivity of the other portions of the thermally conductive member 13 are greater than the thermal conductivity of the main body portion 111.

Such an arrangement makes the overall thermal conductivity of the thermally conductive member 13 greater than the overall thermal conductivity of the main body portion 111, which facilitates heat conduction from the thermally conductive member 13 to the main body portion 111, thus can effectively achieve the heat dissipation of the main body portion 111, and can effectively improve the uniform heat distribution within the main body portion 111.

In some embodiments, a ratio of a thermal conductivity of at least a portion of the thermally conductive member 13 to a thermal conductivity of the main body portion 111 is 1.5 to 5.

The ratio of the thermal conductivity of the at least portion of the thermally conductive member 13 to the thermal conductivity of the main body portion 111 may be 1.5, 2, 2.5, 3, 3.5, 4, 4.5, or the like.

It can be understood that the ratio of the thermal conductivity of the portion of the thermally conductive member 13 to the thermal conductivity of the main body portion 111 is 1.5 to 5, and the thermal conductivity of another portion of the thermally conductive member 13 may be less than the thermal conductivity of the main body portion 111, or may be greater than the thermal conductivity of the main body portion 111, with a ratio of a thermal conductivity of the another portion to a thermal conductivity of the main body portion 111 less than 1.5 or greater than 5; or the ratio of the overall thermal conductivity of the thermally conductive member 13 to the thermal conductivity of the main body portion 111 is 1.5 to 5.

With such an arrangement, for the portion where the ratio of the thermal conductivity of the thermally conductive member 13 to the thermal conductivity of the main body portion 111 is 1.5 to 5, the thermally conductive member 13 exhibits superior thermal conductivity. This helps to conduct heat from the main body portion 111, thereby facilitating heat dissipation at the end of the main body portion 111 having the tabs 112, and contributing to uniform heat distribution within the main body portion 111. Additionally, this facilitates the overall heat dissipation of the main body portion 111.

In some embodiments, the ratio of the overall thermal conductivity of the thermally conductive member 13 to the thermal conductivity of the main body portion 111 is 1.5 to 5. With such an arrangement, the thermally conductive member 13 as a whole exhibits superior thermal conductivity, enabling effective heat conduction from the main body portion 111, facilitating uniform heat distribution within the main body portion 111, and achieving overall heat dissipation of the main body portion 111.

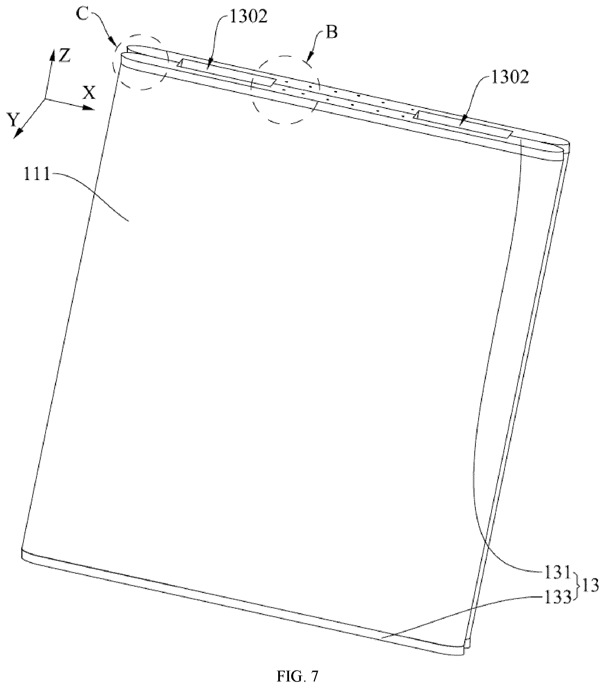

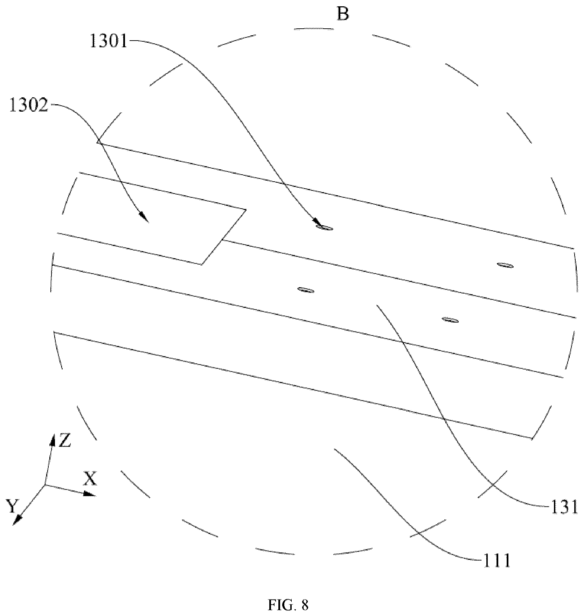

In some embodiments, referring to FIGs. 7 and 8 together, and in combination with other accompanying drawings, FIG. 7 shows a schematic diagram of the cooperation between the main body portion 111 and the thermally conductive member 13 of the battery cell 10 provided in FIG. 3, and FIG. 8 shows a partial enlarged view of FIG. 7. The tabs 112 are inserted through the thermally conductive member 13 and are in contact with the thermally conductive member 13.

Specifically, the tabs 112 are inserted through the first portion 131 of the thermally conductive member 13 and are in contact with the first portion 131.

In some implementations, during designing of the thermally conductive member 13, assembly holes 1302 penetrating the first portion 131 along the first direction Z may be provided in the first portion 131. The tabs 112 are inserted through the assembly holes 1302, achieving an interference fit between the tabs 112 and the assembly holes 1302. This enables contact between the tabs 112 and the first portion 131. The number of tabs 112 may correspond to the number of assembly holes 1302, meaning that each tab 112 may be inserted through a respective assembly hole 1302.

Such an arrangement allows heat from the main body portion 111 to be conducted to the tabs 112 through the first portion 131, and further conducted to the battery housing 12 through the tabs 112, or may be conducted to the electrode terminals 15 on the battery housing 12 through the tabs 112 and dissipated to the external environment. This facilitates the effect of conducting heat from the end of the main body portion 111 having the tabs 112 to the external environment through the first portion 131, helping to reduce the significant heat difference between the region of the main body portion 111 having the tabs 112 and the region farther from the tabs 112, thereby helping to improve the effect of uniform heat distribution within the main body portion 111.

Additionally, the tabs 112 are inserted through the first portion 131 and are in contact with the first portion 131, allowing the first portion 131 to provide a certain restraining effect on the tabs 112. This can effectively mitigate the problem of the tabs 112 bending relative to the main body portion 111, and further preventing cracking of the tabs 112 due to bending relative to the main body portion 111. This can effectively maintain the structural integrity of the electrode assembly 11, preserving the quality and performance of the electrode assembly 11.

In some embodiments, referring to FIGs. 4 to 6 together, and in combination with other accompanying drawings, the battery cell 10 further includes a current collector 14, where the current collector 14 is configured to connect the tabs 112. Additionally, a side of the thermally conductive member 13 facing away from the main body portion 111 in the first direction Z is in contact with the current collector 14.

It can be understood that the current collector 14 is connected to the tabs 112 and to the electrode terminals 15 on the battery housing 12, achieving indirect conduction between the tabs 112 and the electrode terminals 15, enabling the electrode terminals 15 to input or output electrical energy from the electrode assembly 11. In some contexts, the current collector 14 may also be referred to as an adapter piece. The current collector 14 is a metal component configured to transmit electrical energy between the tabs 112 and the electrode terminals 15.

It can be understood that two opposite sides of the first portion 131 in the first direction Z are in contact with the main body portion 111 and the current collector 14, respectively. Specifically, one of the two opposite sides of the first portion 131 in the first direction Z is in contact with the end of the shell 121 having the tabs 112, and the other side is in contact with the current collector 14.

By adopting this technical solution, heat from the main body portion 111 can be conducted to the current collector 14 through the first portion 131, and then conducted to the battery housing 12 through the current collector 14, or may be conducted to the electrode terminals 15 on the battery housing 12 through the current collector and dissipated to the external environment. Such an arrangement enables heat from the end of the main body portion 111 having the tabs 112 to be rapidly dissipated to the external environment through the first portion 131 and the current collector 14 in sequence, to reduce the heat difference between the region of the main body portion 111 close to the tabs 112 and the region farther from the tabs 112, thereby contributing to achieving uniform heat distribution within the main body portion 111.

Additionally, the tabs 112 are inserted through the first portion 131, and the two opposite sides of the first portion 131 in the first direction Z are in contact with the end of the main body portion 111 having the tabs 112 and the current collector 14, respectively. This enables the portion of the tabs 112 between the end of the main body portion 111 and the current collector 14 to be effectively restrained by the first portion 131, can provide better protection for the tabs 112, and thus can mitigate problems such as bending or cracking of the tabs 112 to maintain the quality and performance of the electrode assembly 11.

In some embodiments, referring to FIGs. 3 to 5 together, and in combination with other accompanying drawings, the battery cell 10 further includes a battery housing 12, the electrode assembly 11 and the thermally conductive member 13 are both accommodated within the battery housing 12, and the thermally conductive member 13 is in contact with the battery housing 12.

Such an arrangement allows the thermally conductive member 13 to directly conduct heat from the main body portion 111 to the battery housing 12. This facilitates the heat dissipation effect of the main body portion 111 and contributes to achieving uniform heat distribution within the main body portion 111.

The specific approach for the thermally conductive member 13 to be in contact with the battery housing 12 may be that the first portion 131 of the thermally conductive member 13 is in contact with the battery housing 12, or may be that other portions of the thermally conductive member 13 are in contact with the battery housing 12, which will be described in detail below and not elaborated herein.

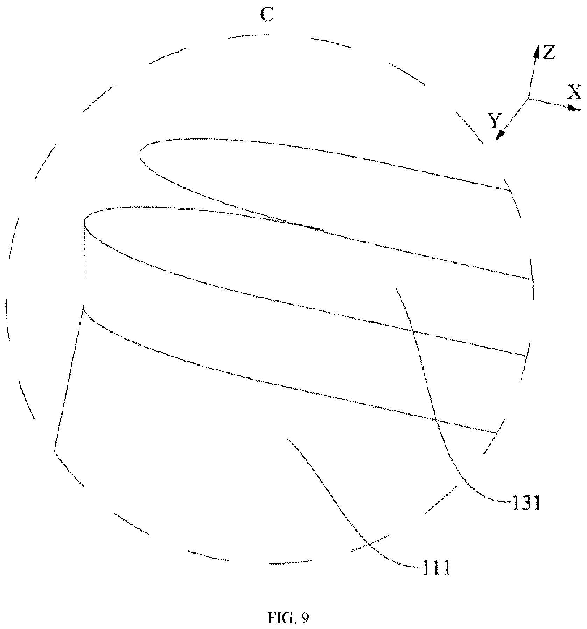

In some embodiments, referring to FIGs. 7 and 9 together, and in combination with other accompanying drawings, a projection of the thermally conductive member 13 along the first direction Z onto the main body portion 111 covers the main body portion 111.

It can be understood that, from a perspective along the first direction Z toward the first portion 131, the thermally conductive member 13 covers the main body portion 111, meaning that the first portion 131 covers the main body portion 111.

Such an arrangement enables the first portion 131 to have a large contact area with the end of the main body portion 111 having the tabs 112. This allows the first portion 131 to effectively conduct heat from the main body portion 111, thereby helping to achieve rapid heat conduction from the end of the main body portion 111 having the tabs 112, and achieving uniform heat distribution within the main body portion 111.

In some embodiments, referring to FIGs. 7 and 9 together, and in combination with other accompanying drawings, the positive electrode plate and the negative electrode plate are stacked and wound to form the electrode assembly 11. Based on this, from a perspective along the first direction Z toward the main body portion 111, the main body portion 111 has four corner positions.

In some embodiments, referring to FIGs. 7 and 9 together, and in combination with other accompanying drawings, from a perspective along the first direction Z toward the first portion 131, four peripheral edges of the first portion 131 coincide with edges of four corner positions of the main body portion 111. This can save material for the first portion 131, which helps to reduce the weight of the thermally conductive member 13 and can reduce the volume occupied by the thermally conductive member 13 in the battery housing 12, and can maintain a high energy density of the battery cell 10. Additionally, this provides a certain gap between the first portion 131 and the battery housing 12, facilitating electrolyte penetration.

In some embodiments, referring to FIGs. 3 to 6 together, and in combination with other accompanying drawings, the number of electrode assemblies 11 is multiple, and the multiple electrode assemblies 11 are sequentially distributed along the second direction Y, specifically, the main body portions 111 of the multiple electrode assemblies 11 are sequentially distributed along the second direction Y. The thermally conductive member 13 includes a first portion 131 and a second portion 132. The first portion 131 is disposed at the end of the main body portion 111 having the tabs 112, and the second portion 132 is disposed between the main body portions 111 of two adjacent electrode assemblies 11 along the second direction Y.

It can be understood that the second portion 132 is disposed between two adjacent main body portions 111 along the second direction Y, with one of two opposite sides of the second portion 132 in the second direction Y being in contact with the main body portion 111 of one electrode assembly 11, and the other side being in contact with the main body portion 111 of another electrode assembly 11.

The second portion 132 is a portion of the thermally conductive member 13 and also has thermal conductivity.

When multiple main body portions 111 are sequentially distributed along the second direction Y, in some cases, the side of the main body portion 111 close to an adjacent main body portion 111 along the second direction Y is difficult to dissipate heat. This results in a higher heat level in the region of the main body portion 111 close to the adjacent main body portion 111 along the second direction Y, easily leading to uneven heat distribution within the main body portion 111.

In the battery cell provided in this embodiment of the present application, by disposing the second portion 132 between two adjacent main body portions 111 along the second direction Y, the second portion 132 can conduct heat from each of the two adjacent main body portions 111. In this way, the second portion 132 can conduct and dissipate heat from the region of the main body portion 111 close to the adjacent main body portion 111 along the second direction Y, thereby helping to mitigate the problem of significant heat differences across different regions within the main body portion 111, thereby improving the effect of uniform heat distribution within the main body portion 111. Additionally, the second portion 132 is disposed between two adjacent main body portions 111. On the basis of achieving heat conduction for the main body portion 111, the number of second portions 132 can be reduced to decrease the space occupied by the thermally conductive member 13 within the battery cell 10, thereby maintaining a high energy density of the battery cell 10.

It can be understood that the first portion 131 of the thermally conductive member 13 is disposed at the end of the main body portion 111 having the tabs 112, and the second portion 132 of the thermally conductive member 13 is disposed at the side of the main body portion 111 close to an adjacent main body portion 111 in the second direction Y. The end of the main body portion 111 having the tabs 112 is a region with high heat generation and difficulty in heat dissipation, and the side of the main body portion 111 close to an adjacent main body portion 111 is a region with difficulty in heat dissipation. By providing the first portion 131 and the second portion 132 of the thermally conductive member 13, the thermally conductive member 13 can effectively conduct and dissipate heat from all regions of the main body portion 111 where heat dissipation is challenging, facilitating cooling of the entire main body portion 111, and reducing significant heat differences across different regions of the main body portion 111, that is, mitigating the problem of uneven heat distribution within the main body portion 111, thereby achieving uniform heat distribution within the main body portion 111, and contributing to improving the performance and lifespan of the battery cell 10.

It should be noted herein that during operation of the thermally conductive member 13, the first portion 131 can conduct heat from the main body portion 111 to the battery housing 12 or electrode terminals 15 and dissipate the heat to the external environment. Similarly, the second portion 132 can also conduct heat from the main body portion 111 to the battery housing 12 or electrode terminals 15 and dissipate the heat to the external environment. Additionally, heat can be conducted between the first portion 131 and the second portion 132. For example, the first portion 131 can conduct heat from the end of the main body portion 111 having the tabs 112 to the second portion 132, and then the second portion 132 conducts the heat to the battery housing 12 or electrode terminals 15 and dissipates the heat to the external environment. Alternatively, the second portion 132 can conduct heat from the side of the main body portion 111 in the second direction Y to the first portion 131, and then the first portion 131 conducts the heat to the battery housing 12 or electrode terminals 15 and dissipates the heat to the external environment. The battery housing 12 mentioned herein may be the shell 121 or the end cover 122.

It should also be noted that the first portion 131 may have multiple heat conduction pathways. For example, the first portion 131 may conduct heat to the battery housing 12 or electrode terminals 15 through the tabs 112, or may conduct heat to the battery housing 12 or electrode terminals 15 through the current collector 14, or may conduct heat directly to the side of the battery housing 12 in the second direction Y or the side of the battery housing 12 in the third direction X. The second portion 132 may also have multiple heat conduction pathways. For example, the second portion 132 may conduct heat from the main body portion 111 to two opposite ends of the battery housing 12 in the first direction Z or may conduct heat to two opposite ends of the battery housing 12 in the third direction X. Based on this, the second portion 132 can conduct heat from the main body portion 111 to the battery housing 12 through multiple pathways, achieving a superior heat dissipation.

It should also be noted that heat from the end of the main body portion 111 having the tabs 112 may be directly conducted to the battery housing 12 or electrode terminals 15 through the first portion 131, or may be conducted to the second portion 132 through the first portion 131 and then to the battery housing 12 or electrode terminals 15 through the second portion 132. The pathways for the second portion 132 to conduct heat to the battery housing 12 or electrode terminals 15 can refer to the heat conduction pathways of the second portion 132 described above and will not be repeated herein. In this way, heat from the end of the main body portion 111 having the tabs 112 can be conducted to the battery housing 12 or electrode terminals 15 through multiple heat conduction pathways. Heat from the region of the main body portion 111 close to an adjacent main body portion 111 in the second direction Y can also be conducted to the second portion 132 and to the battery housing 12 or electrode terminals 15 through multiple pathways of the second portion 132. Therefore, this can effectively mitigate the problems of difficulty in dissipating heat from the end of the main body portion 111 having the tabs 112 and from the side of the main body portion 111 close to an adjacent main body portion 111 in the second direction Y, and thus can effectively mitigate the problem of uneven heat distribution within the main body portion 111, thereby helping to improve the effect of uniform heat distribution within the main body portion 111.

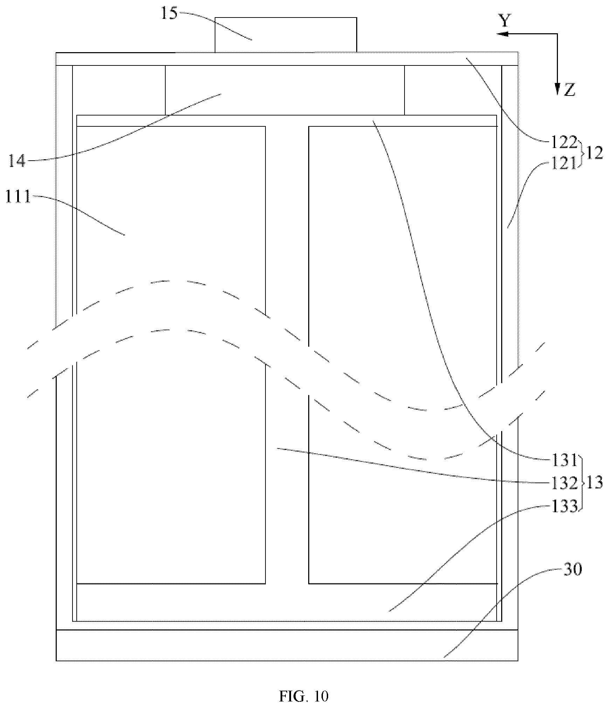

As an example, when the tabs 112 are disposed at one end of the main body portion 111 in the first direction Z, a thermal management component 30 may be disposed at the end of the battery cell 10 farther from the tabs 112 in the first direction Z. As shown in FIG. 10, FIG. 10 is a schematic cross-sectional view of the cooperation between the battery cell 10 and the thermal management component 30 according to some embodiments of the present application. In this case, in the first direction Z, the second portion 132 is closer to the thermal management component 30 than the first portion 131. During operation of the thermally conductive member 13, heat from the end of the main body portion 111 having the tabs 112 may be directly conducted to the battery housing 12 through the first portion 131, or may be conducted to the second portion 132 through the first portion 131 and then to the battery housing 12 through the heat conduction pathways of the second portion 132 described above. It should be particularly noted that the second portion 132 can conduct heat from the first portion 131 to the end of the battery housing 12 farther from the tabs 112 in the first direction Z, that is, to the end of the battery housing 12 closer to the thermal management component 30 in the first direction Z, for heat exchange with the thermal management component 30 to achieve dissipation. Simultaneously, the second portion 132 can also conduct heat from the region of the main body portion 111 close to an adjacent main body portion 111 in the second direction Y to the battery housing 12, specifically to the end of the battery housing 12 closer to the thermal management component 30 in the first direction Z, for heat exchange with the thermal management component 30. In this way, heat from the end of the main body portion 111 having the tabs 112 can be conducted to the battery housing 12 through multiple pathways and can also be more rapidly exchanged with the thermal management component 30 through the second portion 132, enabling rapid dissipation of heat from the end of the main body portion 111 having the tabs 112. Additionally, heat from the side of the main body portion 111 in the second direction Y can also be rapidly dissipated through the thermal management component 30. Therefore, this can effectively mitigate the problems of difficulty in dissipating heat from the end of the main body portion 111 having the tabs 112 and from the region close to an adjacent main body portion 111 in the second direction Y, and thus can effectively mitigate the problem of uneven heat distribution within the main body portion 111, thereby contributing to improving the effect of uniform heat distribution within the main body portion 111.

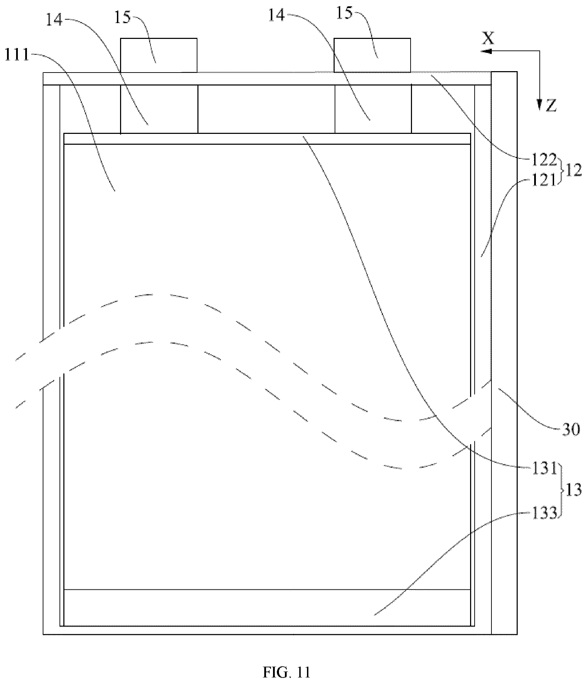

As another example, the tabs 112 are disposed at one end or two ends of the main body portion 111 in the first direction Z. When the number of electrode assemblies 11 is one, or when the number of electrode assemblies 11 is multiple and the main body portions 111 of the multiple electrode assemblies 11 are sequentially distributed along the second direction Y, a thermal management component 30 may be disposed on one side or two opposite sides of the battery cell 10 in the third direction X. As shown in FIG. 11, FIG. 11 is a schematic cross-sectional view of the cooperation between the battery cell 10 and the thermal management component 30 according to some other embodiments of the present application, where the thermal management component 30 is disposed on one side of the battery cell 10 in the third direction X. Based on this, heat from the end of the main body portion 111 having the tabs 112 may be directly conducted to the battery housing 12 through the first portion 131, specifically including conducting heat to one side or two opposite sides of the battery housing 12 in the third direction X for heat exchange with the thermal management component 30. Heat from the end of the main body portion 111 having the tabs 112 may also be conducted to the second portion 132 through the first portion 131 and then to the battery housing 12 through the heat conduction pathways of the second portion 132 described above. It should be particularly noted that the second portion 132 can conduct heat from the first portion 131 to the region of the battery housing 12 closer to the thermal management component 30 in the third direction X for heat exchange with the thermal management component 30. Additionally, heat from the region of the main body portion 111 close to an adjacent main body portion 111 in the second direction Y can also be conducted to the second portion 132 and to the battery housing 12 through the second portion 132, specifically can be conducted to the side of the battery housing 12 in the third direction X, for dissipation through the thermal management component 30 on the side of the battery housing 12 in the third direction X. This can effectively improve the heat dissipation effect for the end of the main body portion 111 having the tabs 112 and the side of the main body portion 111 in the second direction Y, and thus can effectively achieve the effect of uniform heat distribution within the main body portion 111.

The thermal management component 30 may be a liquid cooling tube, or may be a liquid cooling plate with internal flow channels, or may be a combined structure where a liquid cooling tube and a liquid cooling plate are sequentially connected.

In some embodiments, referring to FIGs. 5 and 6 together, and in combination with other accompanying drawings, the first portion 131 and the second portion 132 are connected.

The first portion 131 and the second portion 132 may be independent components, meaning that the first portion 131 and the second portion 132 are separately connected. Alternatively, the first portion 131 and the second portion 132 may be an integrated structure, meaning that the first portion 131 and the second portion 132 are integrally formed.

Such an arrangement facilitates heat conduction between the first portion 131 and the second portion 132. In this way, heat from the end of the main body portion 111 having the tabs 112 can be smoothly conducted to the battery housing 12 through the second portion 132, so that heat from the end of the main body portion 111 having the tabs 112 can be conducted through multiple different pathways, facilitating rapid heat dissipation from the end of the main body portion 111 having the tabs 112. Additionally, heat from the side of the main body portion 111 in the second direction Y can also be conducted to the first portion 131 through the second portion 132 and then to the battery housing 12 or electrode terminals 15 through the first portion 131, effectively achieving heat dissipation from the side of the main body portion 111 in the second direction Y. This contributes to improving the heat distribution uniformity within the main body portion 111.

In some embodiments, as shown in FIGs. 3 and 4, in the first direction Z, a dimension of the second portion 132 is greater than or equal to a dimension of the main body portion 111, and the dimension of the second portion 132 in the first direction Z covers the dimension of the main body portion 111 in the first direction Z. Such an arrangement enables the second portion 132 to have a large contact area with the main body portion 111, which can effectively achieve heat dissipation from the region of the main body portion 111 close to an adjacent main body portion 111 in the second direction Y, thereby effectively achieving the heat dissipation of the main body portion 111. Additionally, when the tabs 112 are disposed at one end of the main body portion 111 in the first direction Z, the second portion 132 can better extend toward the end of the battery housing 12 farther from the tabs 112 in the first direction Z, so that heat from the end of the main body portion 111 having the tabs 112 can be effectively conducted to the end of the battery housing 12 farther from the tabs 112, facilitating the second portion 132 in dissipating heat to the thermal management component 30, thereby improving the heat dissipation effect and improving the effect of uniform heat distribution within the main body portion 111.

In some embodiments, referring to FIGs. 3 to 6 together, a thermal conductivity of the first portion 131 is greater than a thermal conductivity of the second portion 132.

It should be noted that by setting materials of the first portion 131 and the second portion 132 to be different, by setting the dimension of the first portion 131 in the first direction Z and the thickness of the second portion 132 in the second direction Y to be different, or by setting porosities of the first portion 131 and the second portion 132 to be different, the thermal conductivity of the first portion 131 can be made different from the thermal conductivity of the second portion 132. Specifically, the thermal conductivity of the first portion 131 can be made greater than the thermal conductivity of the second portion 132.

It should also be noted that the amount of heat generated at the end of the main body portion 111 having the tabs 112 in the first direction Z is greater than the amount of heat generated in other regions of the main body portion 111. By setting the thermal conductivity of the first portion 131 to be greater than the thermal conductivity of the second portion 132, the thermal conductivity performance of the first portion 131 is greater than the thermal conductivity performance of the second portion 132. Such an arrangement allows the first portion 131 to conduct heat from the end of the main body portion 111 having the tabs 112 in the first direction Z, and the second portion 132 to conduct heat from the side of the main body portion 111 in the second direction Y. This enables the thermally conductive member 13 to perform targeted heat conduction and dissipation based on the different amounts of heat generated in different regions of the main body portion 111, and helps to achieve the effect of uniform heat distribution within the main body portion 111, thereby contributing to improving the performance and lifespan of the battery cell 10.

In some embodiments, referring to FIGs. 3 to 6 together, a ratio of a thermal conductivity of the first portion 131 to a thermal conductivity of the second portion 132 is 1.2 to 2.5.

It can be understood that the ratio of the thermal conductivity of the first portion 131 to the thermal conductivity of the second portion 132 may be 1.2, 1.5, 1.8, 2, 2.2, 2.5, or the like.

By adopting this technical solution, the thermal conductivity of the first portion 131 can be made to be significantly greater than the thermal conductivity of the second portion 132. This enables the thermally conductive member 13 to perform targeted heat conduction and dissipation based on the different amounts of heat generated in different regions of the main body portion 111, thereby helping to achieve the effect of uniform heat distribution within the main body portion 111.

In some embodiments, the thermally conductive member 13 is an insulating structural component. Such an arrangement enables the thermally conductive member 13 to be insulated from the battery housing 12, which can mitigate the problem of short-circuiting of the electrode assembly 11 due to contact between the thermally conductive member 13 and the battery housing 12.

When the thermally conductive member 13 includes only the first portion 131, the first portion 131 is an insulating structural component. When the thermally conductive member 13 includes the first portion 131 and other portions, where the other portions are, for example but not limited to, the second portion 132 and the third portion 133 described below, the first portion 131, the second portion 132, and the other portions are all insulating structural components.

It should be supplemented that the main body portion 111 of the electrode assembly 11 is covered with an insulating film, where the insulating film is used to isolate the main body portion 111 from the battery housing 12. When the thermally conductive member 13 is located outside the insulating film, the thermally conductive member 13 may directly contact the battery housing 12. When the insulating film covers both the main body portion 111 and the thermally conductive member 13, the insulating film may be provided with an opening to allow the thermally conductive member 13 to pass through and be in contact with the battery housing 12. This description applies to the first portion 131, the second portion 132, and the third portion 133 described below.

In some embodiments, the tabs 112 are disposed at one end or two opposite ends of the main body portion 111 in the first direction Z, and one side or two opposite sides of the second portion 132 in the third direction X are in contact with the battery housing 12.

Such an arrangement allows a thermal management component 30 to be disposed on one side or two opposite sides of the battery cell 10 in the third direction X. This facilitates the second portion 132 in conducting heat from the main body portion 111 to one side or two sides of the battery housing 12 in the third direction X, which is then dissipated through the thermal management component 30. In this way, heat from the end of the main body portion 111 having the tabs 112 can be conducted to the second portion 132 through the first portion 131 and then to the battery housing 12 through the second portion 132, and dissipated through the thermal management component 30. This can effectively achieve the heat dissipation for the end of the main body portion 111 having the tabs 112. Additionally, heat from the side of the main body portion 111 in the second direction Y can also be conducted to the battery housing 12 through the second portion 132 and to the thermal management component 30 through the battery housing 12 for dissipation. This contributes to achieving uniform heat distribution within the main body portion 111.

In some embodiments, the tabs 112 are disposed at one end or opposite ends of the main body portion 111 in the first direction Z, and the first portion 131 is in contact with the battery housing 12.

One side or two opposite sides of the first portion 131 in the second direction Y may be in contact with the battery housing 12, in which case a thermal management component 30 may be disposed on one side or two opposite sides of the battery cell 10 in the second direction Y. One side or two sides of the first portion 131 in the third direction X may also be in contact with the battery housing 12, in which case a thermal management component 30 may be disposed on one side or two opposite sides of the battery cell 10 in the third direction X. Furthermore, the first portion 131 may even be in contact with the end of the battery housing 12 in the first direction Z. This enables the first portion 131 to conduct heat from the main body portion 111 to the battery housing 12, facilitates the conduction of heat from the end of the main body portion 111 having the tabs 112 to the battery housing 12, which is then dissipated through the thermal management component 30, thereby contributing to achieving the effect of uniform heat distribution within the main body portion 111.

In some embodiments, the tabs 112 are disposed at one end of the main body portion 111 in the first direction Z, and an end of the second portion 132 facing away from the tabs 112 in the first direction Z is in contact with the battery housing 12.

Such an arrangement allows a thermal management component 30 to be disposed at the end of the battery cell 10 farther from the tabs 112 in the first direction Z, so that the second portion 132 can conduct heat from the main body portion 111 to the end of the battery housing 12 farther from the tabs 112 in the first direction Z, which is then dissipated through the thermal management component 30. In this way, heat from the end of the main body portion 111 having the tabs 112 can be conducted to the second portion 132 through the first portion 131 and then to the end of the battery housing 12 closer to the thermal management component 30 in the first direction Z through the second portion 132, and heat from the side of the main body portion 111 in the second direction Y can also be conducted to the end of the battery housing 12 closer to the thermal management component 30 in the first direction Z through the second portion 132, and dissipated through the thermal management component 30, which can effectively achieve the heat dissipation for the end of the main body portion 111 having the tabs 112, and contributes to achieving the effect of uniform heat distribution within the main body portion 111. Additionally, it also contributes to achieving the effect of overall heat dissipation of the main body portion 111, thereby improving the performance of the main body portion 111.

By adopting this technical solution, it facilitates rapid conduction of heat from the end of the main body portion 111 having the tabs 112 and from the side of the main body portion 111 in the second direction Y to the battery housing 12, which is then dissipated through the thermal management component 30, thereby contributing to achieving the effect of uniform heat distribution within the main body portion 111.

In some embodiments, referring to FIGs. 3 to 5, and FIG. 7 together, and in combination with other accompanying drawings, the tabs 112 are disposed at one end of the main body portion 111 in the first direction Z. The thermally conductive member 13 further includes a third portion 133, where the third portion 133 is disposed at an end of the main body portion 111 opposite to the tabs 112 in the first direction Z.

It can be understood that the first portion 131 is disposed at one end of the main body portion 111 in the first direction Z, specifically at the end of the main body portion 111 having the tabs 112, and the third portion 133 is disposed at the other end of the main body portion 111 in the first direction Z, meaning that the first portion 131 and the third portion 133 are respectively disposed at opposite ends of the main body portion 111 in the first direction Z.

Such an arrangement enables the third portion 133 to conduct heat from an end of the main body portion 111 farther from the tabs 112 in the first direction Z. Additionally, heat from the main body portion 111 can be conducted to the third portion 133 through the first portion 131 and the second portion 132 in sequence, or even heat from the main body portion 111 can be conducted to the third portion 133 through the second portion 132. It should be noted that the third portion 133 is disposed at the end of the main body portion 111 farther from the tabs 112 in the first direction Z, so that the third portion 133 has a large area facing the battery housing 12, facilitating the conduction of heat from the third portion 133 to the battery housing 12, thereby improving the efficiency of the thermally conductive member 13 in conducting heat to the battery housing 12. Therefore, it helps to improve the efficiency of conducting heat from the end of the main body portion 111 having the tabs 112 and from the side of the main body portion 111 in the second direction Y to the battery housing 12, and contributes to achieving uniform heat distribution within the main body portion 111. Additionally, it also contributes to achieving the effect of overall heat dissipation of the main body portion 111.

In some embodiments, referring to FIGs. 4, 5, and 7 together, and in combination with other accompanying drawings, from a perspective along the first direction Z toward the third portion 133, four peripheral edges of the third portion 133 coincide with edges of four corner positions of the main body portion 111.

In some embodiments, referring to FIGs. 4, 5, and 7, a thermal conductivity of the third portion 133 is less than a thermal conductivity of the second portion 132.

It should be noted that in the first direction Z, the amount of heat generated in the main body portion 111 gradually decreases from the end having the tabs 112 toward the direction of the third portion 133. Since multiple main body portions 111 are sequentially distributed along the second direction Y, the region of the main body portion 111 close to an adjacent main body portion 111 in the second direction Y is difficulty in dissipating heat, resulting in the heat at the side of the main body portion 111 in the second direction Y being greater than the heat at the end of the main body portion 111 farther from the tabs 112 in the first direction Z. By setting the thermal conductivity of the third portion 133 to be less than that of the second portion 132, the thermal conductivity performance of the third portion 133 is less than the thermal conductivity performance of the second portion 132. Such an arrangement allows the second portion 132 to conduct heat from the side of the main body portion 111 in the second direction Y, and the third portion 133 to conduct heat from an end of the main body portion 111 farther from the tabs 112. This enables the thermally conductive member 13 to perform targeted heat conduction based on the different amounts of heat generated in different regions of the main body portion 111, thereby helping to achieve the effect of uniform heat distribution within the main body portion 111 and improve the performance and lifespan of the main body portion 111.

The specific approach for setting the thermal conductivity of the third portion 133 to be less than the thermal conductivity of the second portion 132 can refer to the specific description above regarding setting the thermal conductivity of the second portion 132 to be less than the thermal conductivity of the first portion 131, and will not be repeated herein.

In some embodiments, the thermal conductivity of the first portion 131 is greater than the thermal conductivity of the second portion 132, and the thermal conductivity of the second portion 132 is greater than the thermal conductivity of the third portion 133. Such an arrangement enables the thermally conductive member 13 to effectively perform targeted heat conduction based on the different amounts of heat generated in different regions of the main body portion 111, thereby helping to achieve the effect of uniform heat distribution within the main body portion 111 and improve the performance and lifespan of the main body portion 111.

In some embodiments, referring to FIGs. 4, 5, and 7, a ratio of a thermal conductivity of the second portion 132 to a thermal conductivity of the third portion 133 is 1.1 to 1.8.

It can be understood that the ratio of the thermal conductivity of the second portion 132 to the thermal conductivity of the third portion 133 may be 1.1, 1.3, 1.5, 1.7, 1.8, or the like.

By adopting this technical solution, the thermal conductivity of the second portion 132 can be effectively greater than that of the third portion 133. This enables the thermally conductive member 13 to perform targeted heat conduction and dissipation based on the different amounts of heat generated in different regions of the main body portion 111, thereby helping to achieve the effect of uniform heat distribution within the main body portion 111.

In some embodiments, referring to FIG. 5, and in combination with other accompanying drawings, the first portion 131, the second portion 132, and the third portion 133 are sequentially connected.

The first portion 131, the second portion 132, and the third portion 133 may be independent components, meaning that the first portion 131 and the second portion 132, as well as the second portion 132 and the third portion 133, are separately connected. Of course, the first portion 131 and the second portion 132, as well as the second portion 132 and the third portion 133, may alternatively be an integrated structure. When the first portion 131, the second portion 132, and the third portion 133 are an integrated structure, the overall thermal conductivity performance of the thermally conductive member 13 can be effectively enhanced.

Such an arrangement facilitates heat conduction among the first portion 131, the second portion 132, and the third portion 133. In this way, heat from the end of the main body portion 111 having the tabs 112 can be conducted to the second portion 132 through the first portion 131 and then to the battery housing 12 through the second portion 132, or conducted to the third portion 133 through the second portion 132 and then to the battery housing 12. This helps to achieve the heat dissipation of the end of the main body portion 111 having the tabs 112, thereby contributing to achieving uniform heat distribution within the main body portion 111. Additionally, it also helps to achieve the overall heat dissipation of the main body portion 111.

In some embodiments, referring to FIG. 5, and in combination with other accompanying drawings, the battery cell 10 further includes a battery housing 12, with both the electrode assembly 11 and the thermally conductive member 13 accommodated within the battery housing 12. Additionally, two opposite sides of the third portion 133 in the first direction Z are in contact with the main body portion 111 and the battery housing 12, respectively.

It can be understood that, in the two opposite sides of the third portion 133 in the first direction Z, one side is in contact with the end of the main body portion 111 having the tabs 112 in the first direction Z, and the other side is in contact with the end of the battery housing 12 farther from the tabs 112 in the first direction Z.

It should be noted that, compared to the first portion 131 and the second portion 132, the third portion 133 can have a larger contact area with the battery housing 12. Such an arrangement, with the thermally conductive member 13 being in contact with the battery housing 12 through the third portion 133, enables the thermally conductive member 13 to have a large contact area with the battery housing 12, facilitating the conduction of heat from the thermally conductive member 13 to the battery housing 12. Based on this, a thermal management component 30 may be disposed at the end of the battery cell 10 farther from the tabs 112 in the first direction Z. In this way, heat from the main body portion 111 can be conducted to the third portion 133 through the first portion 131 and the second portion 132 in sequence, or may be conducted to the third portion 133 through the second portion 132, or may be directly conducted to the third portion 133 and then conducted to the region of the battery housing 12 closer to the thermal management component 30 through the third portion 133 for heat exchange with the thermal management component 30. This can effectively improve the heat dissipation effect for the end of the main body portion 111 having the tabs 112 and the side of the main body portion 111 in the second direction Y, and contribute to uniform heat distribution within the main body portion 111. Additionally, it also contributes to achieving the effect of overall heat dissipation of the main body portion 111, thereby improving the performance and lifespan of the main body portion 111.

Furthermore, since the third portion 133 abuts against the end of the battery housing 12 farther from the tabs 112 in the first direction Z, the third portion 133 can serve to support and spread open the end of the battery housing 12 farther from the tabs 112 in the first direction Z, thereby mitigating the problem where the main body portion 111e is compressed due to deformation of the battery housing 12. To be specific, the third portion 133 can function as a bottom support plate, eliminating the need for a separate bottom support plate within the battery cell 10, contributing to improving the space utilization within the battery cell 10 and increasing the energy density of the battery cell 10.

Of course, a bottom support plate may still be provided within the battery cell 10. To ensure that the third portion 133 abuts against the battery housing 12, an opening may be provided in the bottom support plate to allow the third portion 133 to pass through and contact the battery housing 12.

In some embodiments, the third portion 133 is also an insulating structural component. This can mitigate the problem of short-circuiting of the electrode assembly 11 due to the contact between the third portion 133 and the battery housing 12.

In some embodiments, referring to FIGs. 5 and 6 together, and in combination with other accompanying drawings, a dimension of the first portion 131 in the first direction Z is less than a dimension of the second portion 132 in the second direction Y.

As shown in FIGs. 5 and 6, a dimension of the first portion 131 in the first direction Z is dimension H1, and a dimension of the second portion 132 in the second direction Y is dimension H2, where H1 is greater than H2.

When the first portion 131 is a sheet-like structure, the dimension H1 may be a thickness of the first portion 131. When the second portion 132 is a sheet-like structure, the dimension H2 may be a thickness of the second portion 132.

By adopting this technical solution, the second portion 132 has a larger dimension in the second direction Y, so that the second portion 132 exhibits superior elastic properties to effectively absorb the expansion of the main body portion 111. Moreover, the first portion 131 has a smaller dimension in the first direction Z, which can reduce the space occupied by the first portion 131 in the first direction Z within the battery housing 12. In this way, a high energy density of the battery cell 10 can be maintained, and the dimension of the through-hole 1301 in the first direction Z can be reduced, which is conducive to the discharge of gases from within the main body portion 111 through the through-hole 1301, and also conducive to the injection of electrolyte into the main body portion 111.

In some embodiments, referring to FIGs. 5 and 6 together, and in combination with other accompanying drawings, a ratio of a dimension of the second portion 132 in the second direction Y to a dimension of the first portion 131 in the first direction Z is 4.5 to 10.

Specifically, the ratio of dimension H2 to dimension H1 may be 4.5, 5, 5.5, 6, 6.5, 7, 7.5, 8, 8.5, 9, 9.5, or the like.

Such an arrangement enables the ratio of dimension H2 to dimension H1 to range from 4.5 to 10, so that the second portion 132 can exhibit superior elastic properties to effectively absorb the expansion of the main body portion 111, and can reduce the space occupied by the first portion 131 in the first direction Z within the battery housing 12. In this way, a high energy density of the battery cell 10 can be maintained, and the dimension of the through-hole 1301 in the first direction Z can be reduced, which is conducive to the discharge of gases from within the main body portion 111 through the through-hole 1301, and also conducive to the injection of electrolyte into the main body portion 111.

In some embodiments, referring to FIG. 5, and in combination with other accompanying drawings, the tabs 112 are disposed at one end of the main body portion 111 in the first direction Z, the thermally conductive member 13 further includes a third portion 133, the third portion 133 is disposed at the end of the main body portion 111 farther from the tabs 112 in the first direction Z, and a dimension of the third portion 133 in the first direction Z is less than a dimension of the second portion 132 in the second direction Y.

As shown in FIG. 5, the dimension of the third portion 133 in the first direction Z is dimension H3, where the dimension H3 is greater than the dimension H2.

When the third portion 133 is a sheet-like structure, the dimension H3 may be a thickness of the third portion 133.

Such an arrangement helps to reduce the space occupied by the third portion 133 in the first direction Z within the battery housing 12, thereby contributing to maintaining a high energy density of the battery cell 10.

Correspondingly, the ratio of the dimension H2 to the dimension H3 may also be 4.5, 5, 5.5, 6, 6.5, 7, 7.5, 8, 8.5, 9, 9.5, or the like, satisfying the ratio range of 4.5 to 10.

In some embodiments, referring to FIGs. 7 and 8 together, and in combination with other accompanying drawings, a through-hole 1301 penetrating the thermally conductive member 13 in the first direction Z is provided.

Specifically, the first portion 131 is provided with a through-hole 1301 penetrating in the first direction Z.

When the tabs 112 are disposed at one end of the main body portion 111 in the first direction Z, the first portion 131 is disposed at the end of the main body portion 111 having the tabs 112, and this first portion 131 is provided with a through-hole 1301; and when the tabs 112 are disposed at two opposite ends of the main body portion 111 in the first direction Z, the first portions 131 are disposed at two opposite ends of the main body portion 111 in the first direction Z, and the first portions 131 at the two opposite ends of the main body portion 111 in the first direction Z may each be provided with a through-hole 1301.

Such an arrangement allows gases generated inside the main body portion 111 during the formation stage of the electrode assembly 11 to be discharged through the through-hole 1301 to the outside of the main body portion 111. In this way, when the battery cell 10 experiences thermal runaway, high-temperature and high-pressure gases inside the main body portion 111 can be discharged through the through-hole 1301 to a pressure relief mechanism 16 on the battery housing 12 and then to the external environment, reducing the risk of explosion due to thermal runaway inside the battery cell 10. Moreover, during injecting of the electrolyte into the battery cell 10, the electrolyte can be injected into the main body portion 111 through the through-hole 1301, facilitating the penetration of the electrolyte within the electrode assembly 11.

In some embodiments, referring to FIGs. 3 and 4 together, and in combination with other accompanying drawings, the pressure relief mechanism 16 includes an explosion-proof valve, where the explosion-proof valve may be a weakened structure on the battery housing 12 with lower structural strength compared to other portions of the battery housing 12, allowing high-temperature and high-pressure gases inside the battery cell 10 to break through the explosion-proof valve during thermal runaway.

In some embodiments, referring to FIGs. 3 and 4 together, and in combination with other accompanying drawings, the pressure relief mechanism 16 is disposed on the end cover 122 of the battery housing 12, or of course may be disposed on the shell 121 of the battery housing 12.

In some embodiments, referring to FIGs. 7 and 8 together, and in combination with other accompanying drawings, the first portion 131 may be provided with multiple spaced-apart through-holes 1301, facilitating the discharge of gases from inside the main body portion 111 and facilitating the penetration of the electrolyte into the main body portion 111.

In some embodiments, at least one through-hole 1301 is aligned with an injection hole of the battery housing 12 in the first direction Z, facilitating the injection of the electrolyte into the main body portion 111. The injection hole refers to an opening on the battery housing 12 used for injecting the electrolyte, and is typically provided on the end cover 122 of the battery housing 12.

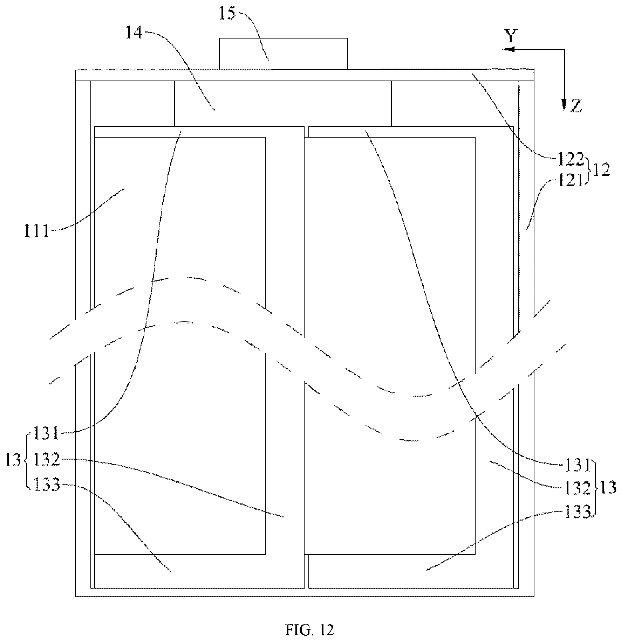

In some embodiments, referring to FIG. 12, and in combination with other accompanying drawings, the number of thermally conductive members 13 is multiple, and each thermally conductive member 13 is correspondingly disposed at each main body portion 111.

It can be understood that the number of thermally conductive members 13 is multiple, the number of electrode assemblies 11 is also multiple, and the number of thermally conductive members 13 matches the number of electrode assemblies 11, with a one-to-one correspondence, so that each thermally conductive member 13 is disposed on a corresponding main body portion 111. Specifically, the first portion 131 of each thermally conductive member 13 is disposed at the end of the corresponding main body portion 111 having the tabs 112, and the second portion 132 of each thermally conductive member 13 is disposed at the side of the corresponding main body portion 111 in the second direction Y.

In some embodiments, referring to FIGs. 3 to 6 together, and in combination with other accompanying drawings, the first portion 131 is disposed at the ends of multiple main body portions 111 having the tabs 112.

It can be understood that the number of thermally conductive members 13 is less than the number of electrode assemblies 11, and one thermally conductive member 13 includes at least one second portion 132. Specifically, the first portion 131 is simultaneously disposed at the ends of multiple main body portions 111 having the tabs 112, and one second portion 132 is disposed between two adjacent main body portions 111 in the second direction Y. When the number of electrode assemblies 11 sequentially distributed in the second direction Y is three or more, the thermally conductive member 13 includes multiple second portions 132, with the multiple second portions 132 spaced apart along the second direction Y on the first portion 131, so that each second portion 132 is disposed between two corresponding adjacent main body portions 111 in the second direction Y.

As an example, as shown in FIG. 5, and in combination with other accompanying drawings, the number of thermally conductive members 13 is one, the first portion 131 of the thermally conductive member 13 is disposed at the ends of all main body portions 111 having the tabs 112 distributed along the second direction Y, and a second portion 132 is disposed between any two adjacent main body portions 111 in the second direction Y.

By adopting this technical solution, the thermally conductive member 13 can dissipate heat from multiple main body portions 111, contributing to mitigating the problem of uneven heat distribution within the multiple main body portions 111. Additionally, the solution where the first portion 131 is disposed at the ends of multiple main body portions 111 having the tabs 112 simplifies the assembly process of the first portion 131 within the battery cell 10, eliminating the need to assemble each thermally conductive member 13 individually, thereby improving the assembly efficiency of the battery cell 10.

When the number of electrode assemblies 11 is multiple, the entirety formed by the main body portions 111 of the multiple electrode assemblies 11 and the thermally conductive member 13 may be wrapped with an insulating film. Alternatively, each main body portion 111 may be individually wrapped with an insulating film, with the thermally conductive member 13 located outside the insulating film.

In some embodiments, the thermally conductive member 13 has buffering properties.

It can be understood that when the thermally conductive member 13 includes only the first portion 131, the first portion 131 has buffering properties. When the thermally conductive member 13 includes the first portion 131 and other portions, such as but not limited to the second portion 132 and the third portion 133 described below, the first portion 131, the second portion 132, and the other portions all have buffering properties.

Such an arrangement, with the second portion 132 disposed between two adjacent main body portions 111 in the second direction Y, allows the second portion 132 to elastically abut against the two adjacent main body portions 111 in the second direction Y, providing appropriate buffering for the two adjacent main body portions 111 to absorb their expansion, thereby mitigating lithium plating problems in the main body portion 111. On the other hand, with two opposite sides of the first portion 131 in the first direction Z contacting the main body portion 111 and the current collector 14, respectively, the first portion 131 can elastically abut against the main body portion 111 and the current collector 14 in the first direction Z. Thus, the first portion 131 can provide appropriate buffering for the tabs 112, offering protection to the tabs 112, thereby mitigating problems such as bending or cracking of the tabs 112 relative to the main body portion 111.

Additionally, when the thermally conductive member 13 further includes the third portion 133, two opposite sides of the third portion 133 in the first direction Z may contact the main body portion 111 and the battery housing 12, respectively, allowing the third portion 133 to elastically abut against the main body portion 111 and the battery housing 12 in the first direction Z. Thus, the third portion 133 can provide appropriate preload to the main body portion 111, facilitating stable placement of the main body portion 111 within the battery housing 12, contributing to maintaining high structural stability of the battery cell 10.

In some embodiments, the thermally conductive member 13 includes one or more of a polyethylene material component, a polypropylene material component, a polyvinyl chloride material component, or a polyethylene terephthalate material component. That is, the first portion 131, the second portion 132, and the third portion 133 may each be made from one or more of the aforementioned materials.

By adopting these materials, firstly, the thermally conductive member 13 has superior thermal conductivity, facilitating effective heat conduction from the main body portion 111, contributing to achieving the effect of uniform heat distribution within the main body portion 111, and contributing to achieving the effect of overall heat distribution of the main body portion 111. Secondly, the thermally conductive member 13 has superior insulating properties, mitigating the problem of short-circuiting of the electrode assembly 11 caused by the thermally conductive member 13. Thirdly, the thermally conductive member 13 has superior electrolyte penetration properties, allowing the electrolyte to penetrate into the main body portion 111 through the thermally conductive member 13, particularly through the first portion 131, when injected, facilitating electrolyte penetration. Fourthly, the thermally conductive member 13 has superior elastic properties; specifically, the second portion 132 can provide effective buffering for two adjacent main body portions 111 to absorb their expansion; the first portion 131 can provide buffering protection for the tabs 112, mitigating problems such as bending or cracking of the tabs 112 relative to the main body portion 111; and the third portion 133 can provide appropriate preload to the main body portion 111, ensuring better structural stability of the electrode assembly 11.

Based on the above concepts, referring to FIG. 2, and in combination with other accompanying drawings, the embodiments of the present application further provide a battery 100, including multiple battery cells 10. The battery cell 10 in this embodiment is the same as the battery cell 10 in the previous embodiment. For details, refer to the relevant description of the battery cell 10 in the previous embodiment, which will not be repeated herein.

The battery 100 provided in this embodiment of the present application, by adopting the battery cells 10 described in the above embodiments, can also mitigate the problem of uneven heat distribution within the main body portion 111 due to high heat generation at the end having the tabs 112. This helps to achieve the effect of uniform heat distribution within the main body portion 111, thereby contributing to improving the performance and lifespan of the battery 100, and further enhancing the performance of the electric apparatus.

In some embodiments, referring to FIGs. 10 and 11 together, and in combination with other accompanying drawings, the battery 100 further includes a thermal management component 30 for dissipating heat from the battery cells 10.

In some embodiments, the thermal management component 30 is disposed outside the battery cell 10.

In some embodiments, the thermal management component 30 may be a liquid cooling tube, a liquid cooling plate with internal flow channels, or a combined structure formed by a liquid cooling tube and a liquid cooling plate.

By adopting this technical solution, the thermal management component 30 can perform thermal management on the battery cells 10. Specifically, the thermally conductive member 13 can conduct heat from the main body portion 111 to the battery housing 12, which is then dissipated through the thermal management component 30, facilitating heat dissipation from the main body portion 111, contributing to uniform heat distribution within the main body portion 111, and aiding in the overall heat dissipation of the battery cell 10.

In some embodiments, referring to FIG. 10, and in combination with other accompanying drawings, the tabs 112 are disposed at one end of the main body portion 111 in the first direction Z, and the thermal management component 30 is disposed at the end of the battery cell 10 farther from the tabs 112 in the first direction Z.

Such an arrangement allows the first portion 131 to conduct heat from the end of the main body portion 111 having the tabs 112 to the second portion 132, which then conducts it to the end of the battery housing 12 closer to the thermal management component 30 in the first direction Z. The second portion 132 can also conduct heat from the side of the main body portion 111 in the second direction Y to the end of the battery housing 12 closer to the thermal management component 30 in the first direction Z. The first portion 131 can also conduct heat from the end of the main body portion 111 having the tabs 112 to the second portion 132 and then to the third portion 133, and the second portion 132 can conduct heat from the main body portion 111 to the third portion 133, which then conducts it to the end of the battery housing 12 closer to the thermal management component 30 in the first direction Z. The second portion 132 can also conduct heat from the side of the main body portion 111 in the second direction Y to the third portion 133, which then conducts it to the end of the battery housing 12 closer to the thermal management component 30 in the first direction Z for dissipation. This effectively achieves the heat dissipation effect of the thermal management component 30 on the main body portion 111, enabling the thermal management component 30 to dissipate heat from the end of the main body portion 111 having the tabs 112 and the side of the main body portion 111 in the second direction Y, contributing to uniform heat distribution within the main body portion 111, and facilitating the overall heat dissipation of the main body portion 111.

In some embodiments, referring to FIG. 11, and in combination with other accompanying drawings, the thermal management component 30 is disposed at the side of the battery cell 10 in the third direction X.

Specifically, the thermal management component 30 may be disposed on one side or two opposite sides of the battery cell 10 in the third direction X.

By adopting this technical solution, the thermal management component 30 can be disposed at various positions on the battery cell 10, facilitating the thermally conductive member 13 in conducting heat from the main body portion 111 to the battery housing 12, which is then exchanged with the thermal management component 30 at the corresponding position, effectively achieving heat dissipation from the main body portion 111, and contributing to uniform heat distribution within the main body portion 111.

Based on the above concepts, referring to FIG. 1, and in combination with other accompanying drawings, the embodiments of the present application further provide an electric apparatus. The electric apparatus includes a battery cell 10; alternatively, the electric apparatus includes a battery 100. The battery cell 10 and battery 100 in this embodiment are the same as the battery cell 10 and battery 100 in the previous embodiment; for details, refer to the relevant description of the battery cell 10 and battery 100 in the previous embodiment, which will not be repeated herein.

The electric apparatus provided in this embodiment of the present application, by adopting the battery cell 10 or battery 100 described above, facilitates uniform heat distribution within the battery cell 10, thereby contributing to improving the performance and lifespan of the battery 100, and further enhancing the performance of the electric apparatus.

As one embodiment of the present application, as shown in FIGs. 3 to 5, and in combination with other accompanying drawings, the battery cell 10 includes an electrode assembly 11 and a thermally conductive member 13. The electrode assembly 11 includes a main body portion 111 and tabs 112, with the tabs 112 disposed at one end of the main body portion 111 in the first direction Z. The main body portions 111 of multiple electrode assemblies 11 are sequentially distributed along the second direction Y. The thermally conductive member 13 includes a first portion 131, a second portion 132, and a third portion 133, where the first portion 131 is disposed at the end of the main body portion 111 having the tabs 112, the second portion 132 is disposed between two adjacent main body portions 111 in the second direction Y, and the third portion 133 is disposed at the end of the main body portion 111 farther from the first portion 131 in the first direction Z, with the side of the third portion 133 farther from the first portion 131 in the first direction Z contacting the end of the battery housing 12 farther from the tabs 112 in the first direction Z. The thermal conductivity of the first portion 131 is greater than the thermal conductivity of the second portion 132, the thermal conductivity of the second portion 132 is greater than the thermal conductivity of the third portion 133, and the thermal conductivity of the third portion 133 is greater than the thermal conductivity of the main body portion 111.

As another embodiment of the present application, as shown in FIG. 6, and in combination with other accompanying drawings, the battery cell 10 includes an electrode assembly 11 and a thermally conductive member 13. The electrode assembly 11 includes a main body portion 111 and tabs 112, with the tabs 112 disposed at opposite ends of the main body portion 111 in the first direction Z. The number of electrode assemblies 11 is multiple, and the main body portions 111 of the multiple electrode assemblies 11 are sequentially distributed along the second direction Y. The thermally conductive member 13 includes a first portion 131 and a second portion 132, where the ends of the main body portion 111 having the tabs 112 are each provided with a first portion 131, and the second portion 132 is disposed between two adjacent main body portions 111 in the second direction Y. The thermal conductivity of the first portion 131 is greater than the thermal conductivity of the second portion 132, and the thermal conductivity of the second portion 132 is greater than the thermal conductivity of the main body portion 111.

The above are merely optional embodiments of the present application and are not intended to limit the present application. For those skilled in the art, various modifications and variations may be made to the present application. Any modifications, equivalent substitutions, improvements, and the like made within the spirit and principles of the present application shall be included within the scope of the claims of the present application.

## Claims

1. A battery cell (10), comprising:
an electrode assembly (11) comprising a main body portion (111) and tabs (112) disposed at one end or opposite ends of the main body portion (111); and
a thermally conductive member (13), at least partially disposed at an end of the main body portion (111) having the tabs (112).

2. The battery cell (10) according to claim 1, wherein a thermal conductivity of at least a portion of the thermally conductive member (13) is greater than a thermal conductivity of the main body portion (111).

3. The battery cell (10) according to claim 1 or 2, wherein a ratio of a thermal conductivity of at least a portion of the thermally conductive member (13) to a thermal conductivity of the main body portion (111) is 1.5 to 5.

4. The battery cell (10) according to any one of claims 1 to 3, wherein the tabs (112) are inserted through the thermally conductive member (13) and are in contact with the thermally conductive member (13).

5. The battery cell (10) according to any one of claims 1 to 4, wherein the tabs (112) are disposed at one end or opposite ends of the main body portion (111) in a first direction (Z); the battery cell (10) further comprises a current collector (14) configured to connect the tabs (112), and a side of the thermally conductive member (13) facing away from the main body portion (111) in the first direction (Z) is in contact with the current collector (14).

6. The battery cell (10) according to any one of claims 1 to 5, wherein the battery cell (10) further comprises a battery housing (12), the electrode assembly (111) and the thermally conductive member (13) are both accommodated within the battery housing (12), and the thermally conductive member (13) is in contact with the battery housing (12).

7. The battery cell (10) according to any one of claims 1 to 6, wherein the tabs (112) are disposed at one end or opposite ends of the main body portion (111) in a first direction (Z), and a projection of the thermally conductive member (13) along the first direction (Z) onto the main body portion (111) covers the main body portion (111).

8. The battery cell (10) according to any one of claims 1 to 7, wherein the tabs (112) are disposed at one end or opposite ends of the main body portion (111) in a first direction (Z); a plurality of electrode assemblies (11) are provided, and the main body portions (111) of the plurality of electrode assemblies (11) are sequentially distributed along a second direction (Y);
the thermally conductive member (13) comprises a first portion (131) and a second portion (132), the first portion (131) disposed at the end of the main body portion (111) having the tabs (112), and the second portion (132) disposed between two adjacent main body portions (111) along the second direction (Y); and
the first direction (Z) intersects with the second direction (Y).

9. The battery cell (10) according to claim 8, wherein a thermal conductivity of the first portion (131) is greater than a thermal conductivity of the second portion (132).

10. The battery cell (10) according to claim 8 or 9, wherein a ratio of a thermal conductivity of the first portion (131) to a thermal conductivity of the second portion (132) is 1.2 to 2.5.

11. The battery cell (10) according to any one of claims 8 to 10, wherein the battery cell (10) further comprises a battery housing (12), and the electrode assemblies (111) and the thermally conductive member (13) are accommodated within the battery housing (12); and
the tabs (112) are disposed at one end of the main body portion (111) in the first direction (Z), and an end of the second portion (132) facing away from the tabs (112) along the first direction (Z) is in contact with the battery housing (12); and/or one side or two opposite sides of the second portion (132) in a third direction (X) are in contact with the battery housing (12), wherein the third direction (X) intersects with the first direction (Z) and the second direction (Y), respectively; and/or the first portion (131) is in contact with the battery housing (12).

12. The battery cell (10) according to any one of claims 8 to 11, wherein the tabs (112) are disposed at one end of the main body portion (111) in the first direction (Z), the thermally conductive member (13) further comprises a third portion (133), and the third portion (133) is disposed at an end of the main body portion (111) opposite to the tabs (112) in the first direction (Z).

13. The battery cell (10) according to claim 12, wherein a thermal conductivity of the third portion (133) is less than a thermal conductivity of the second portion (132).

14. The battery cell (10) according to claim 12 or 13, wherein a ratio of a thermal conductivity of the second portion (132) to a thermal conductivity of the third portion (133) is 1.1 to 1.8.

15. The battery cell (10) according to any one of claims 12 to 14, wherein, in the first direction (Z), the first portion (131), the second portion (132), and the third portion (133) are sequentially connected.

16. The battery cell (10) according to any one of claims 12 to 15, wherein the battery cell (10) further comprises a battery housing (12), the electrode assemblies (11) and the thermally conductive member (13) are accommodated within the battery housing (12), and two opposite sides of the third portion (133) in the first direction (Z) are in contact with the main body portion (111) and the battery housing (12), respectively.

17. The battery cell (10) according to any one of claims 8 to 16, wherein a dimension of the first portion (131) in the first direction (Z) is less than a dimension of the second portion (132) in the second direction (Y).

18. The battery cell (10) according to any one of claims 8 to 17, wherein a ratio of a dimension of the second portion (132) in the second direction (Y) to a dimension of the first portion (131) in the first direction (Z) is 4.5 to 10.

19. The battery cell (10) according to any one of claims 8 to 18, wherein the tabs (112) are disposed at one end of the main body portion (111) in the first direction (Z), the thermally conductive member (13) further comprises a third portion (133), the third portion (133) is disposed at an end of the main body portion (111) opposite to the tabs (112) in the first direction (Z), and a dimension of the third portion (133) in the first direction (Z) is less than a dimension of the second portion (132) in the second direction (Y).

20. The battery cell (10) according to any one of claims 1 to 19, wherein the tabs (112) are disposed at one end or opposite ends of the main body portion (111) in a first direction (Z), and the thermally conductive member (13) is provided with a through-hole (1301) penetrating along the first direction (Z).

21. The battery cell (10) according to any one of claims 1 to 20, wherein a plurality of thermally conductive members (13) are provided, and each of the thermally conductive members (13) is correspondingly disposed at each of the main body portions (111); or
the thermally conductive member (13) is disposed at ends of multiple main body portions (111) having the tabs (112).

22. The battery cell (10) according to any one of claims 1 to 21, wherein the thermally conductive member (13) has buffering properties.

23. A battery (100), comprising multiple battery cells (10) according to any one of claims 1 to 22.

24. The battery (100) according to claim 23, wherein the battery (100) further comprises a thermal management component (30) configured to dissipate heat from the battery cells (10).

25. The battery (100) according to claim 24, wherein the tabs (112) are disposed at one end of the main body portion (111) in a first direction (Z), and the thermal management component (30) is disposed at an end of the battery cell (10) facing away from the tabs (112) along the first direction (Z); and/or
the tabs (112) are disposed at one end or opposite ends of the main body portion (111) in the first direction (Z), and in a direction intersecting the first direction (Z), the thermal management component (30) is disposed at a side of the battery cell (10).

26. An electric apparatus, comprising a battery cell (10) according to any one of claims 1 to 22; or comprising a battery (100) according to any one of claims 23 to 25.
